# EUROPEAN PATENT APPLICATION

(11) **EP 4 549 643 A1**
(43) Date of publication of application: **07.05.2025**
(21) Application number: 23831585.7
(22) Date of filing: 29.06.2023
(51) Int. Cl.: D04H 3/011, D01F 6/62

(54) **MELT-BLOWN NONWOVEN FABRIC, LAMINATE, FILTER FOR MASK, AND MASK**

(30) Priority: 30.06.2022 JP 2022106106
(71) Applicant: Kaneka Corporation, Osaka-shi, Osaka 530-8288 (JP)
(72) Inventor: SHIMAMOTO, Hitoshi, 566-0072 Osaka (JP); MIYAMOTO, Takayuki, 566-0072 Osaka (JP); MAEDA, Takekazu, 566-0072 Osaka (JP); TAMURA, Masanobu, 566-0072 Osaka (JP); OTANI, Shunsuke, 566-0072 Osaka (JP)
(74) Representative: Vossius & Partner Patentanwälte Rechtsanwälte mbB
(86) International application number: PCT/JP2023/024192
(87) International publication number: WO 2024/005146

(57) **Abstract**

The present invention provides, for example, a melt-blown nonwoven fabric that is tear-resistant and that has high particle filtration efficiency. The present invention is, for example, a melt-blown nonwoven fabric including fibers. The fibers are formed from a resin composition that contains a poly(3-hydroxyalkanoate)-based resin. The poly(3-hydroxyalkanoate)-based resin includes a copolymer including a 3-hydroxybutyrate unit. A content ratio of the 3-hydroxybutyrate unit in the poly(3-hydroxyalkanoate)-based resin is greater than or equal to 80.0% by mole and less than or equal to 93.5% by mole. An average value of fiber diameters of the fibers is less than or equal to 8.0 µm.

## Description

### Technical Field

The present invention relates to a melt-blown nonwoven fabric, a layered body, a filter for a face mask, and a face mask.

### Background Art

A melt-blown nonwoven fabric is a nonwoven fabric obtained by melt-blown technique, in which a polymer and hot gas are discharged together from a spinneret. The melt-blown nonwoven fabric has a microporous structure.

For instance, the melt-blown nonwoven fabric is used as a material of, for example, a removal filter to remove particles (e.g., particles to which viruses or the like are attached, pollen, etc.) (the removal filter herein is a concept encompassing, for example, a filter for a face mask and a barrier filter), a blood filter to filter out blood cells, or a beverage extraction filter (e.g., a coffee dripping filter or a tea bag) (see Patent Literature 1, for example).

In light of reducing the load on the global environment, a fiber containing a poly(3-hydroxyalkanoate)-based resin, which is a biodegradable resin, is used as a fiber of the nonwoven fabric (see Patent Literature 2, for example).

### Citation List

### Patent Literature

PTL 1: Japanese National Phase PCT Laid-Open Application Publication No. 2022-505070
PTL 2: WO 2019/142920

### Summary of Invention

### Technical Problem

Melt-blown nonwoven fabrics are required to have high efficiency in the filtration of particles (e.g., blood cells, pollen, coffee grounds, tea leaves, particles to which viruses or the like are attached, etc.).

Therefore, in the case of a melt-blown nonwoven fabric, the nonwoven fabric is treated to be electrostatically charged by corona discharge to increase the particle filtration efficiency.

However, a sufficient study has not been conducted on how to increase the particle filtration efficiency of a melt-blown nonwoven fabric by a technique different from the electrostatic charge treatment.

Melt-blown nonwoven fabrics may also be required to be tear-resistant.

In view of the above, a problem to be solved by the present invention is to provide a melt-blown nonwoven fabric that is tear-resistant and that has high particle filtration efficiency. Another problem to be solved by the present invention is to provide: a layered body including the melt-blown nonwoven fabric; a filter for a face mask, the filter being formed from the melt-blown nonwoven fabric or from the layered body; and a face mask including the filter for a face mask.

### Solution to Problem

A first aspect of the present invention relates to a melt-blown nonwoven fabric including fibers. The fibers are formed from a resin composition that contains a poly(3-hydroxyalkanoate)-based resin. The poly(3-hydroxyalkanoate)-based resin includes a copolymer including a 3-hydroxybutyrate unit. A content ratio of the 3-hydroxybutyrate unit in the poly(3-hydroxyalkanoate)-based resin is greater than or equal to 80.0% by mole and less than or equal to 93.5% by mole. An average value of fiber diameters of the fibers is less than or equal to 8.0 µm.

A second aspect of the present invention relates to a layered body including: a first nonwoven fabric; and a second nonwoven fabric layered over at least one surface of the first nonwoven fabric. The first nonwoven fabric is the melt-blown nonwoven fabric. The second nonwoven fabric is a nonwoven fabric including cellulosic fibers.

A third aspect of the present invention relates to a filter for a face mask, the filter being formed from the melt-blown nonwoven fabric or from the layered body.

A fourth aspect of the present invention relates to a face mask including: a mask body; and the filter for a face mask.

### Advantageous Effects of Invention

The present invention makes it possible to provide a melt-blown nonwoven fabric that is tear-resistant and that has high particle filtration efficiency. The present invention also makes it possible to provide: a layered body including the melt-blown nonwoven fabric; a filter for a face mask, the filter being formed from the melt-blown nonwoven fabric or from the layered body; and a face mask including the filter for a face mask.

### Brief Description of Drawings

FIG. 1 is a schematic diagram showing a melt-blown nonwoven fabric producing apparatus.
FIG. 2 is a schematic perspective view of a nozzle.
FIG. 3 is a schematic sectional view of a nozzle hole and a conveyor belt.
FIG. 4 is a photograph of a first test piece.
FIG. 5 is a photograph of a second test piece.

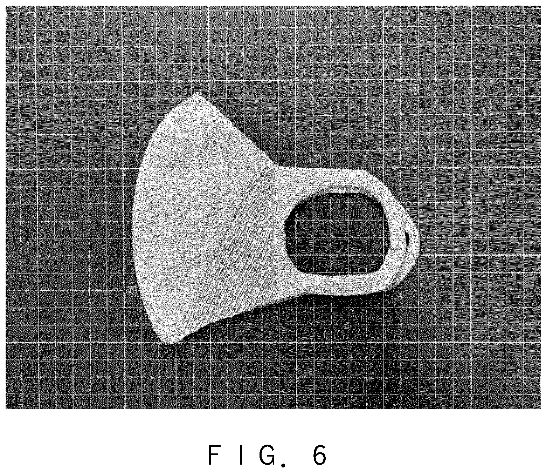

FIG. 6 is a photograph of a mask body.

### Description of Embodiments

Hereinafter, one embodiment of the present invention is described with reference to the accompanying drawings.

### <Melt-blown Nonwoven Fabric>

First, a melt-blown nonwoven fabric according to the present embodiment is described.

The melt-blown nonwoven fabric according to the present embodiment includes fibers.

The fibers are formed from a resin composition containing a poly(3-hydroxyalkanoate)-based resin.

The poly(3-hydroxyalkanoate)-based resin includes a copolymer including a 3-hydroxybutyrate unit.

The content ratio of the 3-hydroxybutyrate unit in the poly(3-hydroxyalkanoate)-based resin is greater than or equal to 80.0% by mole and less than or equal to 93.5% by mole.

The average value of the fiber diameters of the fibers is less than or equal to 8.0 µm.

The melt-blown nonwoven fabric according to the present embodiment is a nonwoven fabric obtained by melt-blown technique.

It should be noted that the melt-blown nonwoven fabric according to the present embodiment is a concept encompassing a nonwoven fabric that is obtained by spun-blown (registered trademark) technique.

The resin composition contains a polymer component. The resin composition may further contain an additive.

The polymer component contains a poly(3-hydroxyalkanoate)-based resin.

The polymer component may contain another polymer in addition to the poly(3-hydroxyalkanoate)-based resin.

The poly(3-hydroxyalkanoate)-based resin is a polyester containing a 3-hydroxyalkanoic acid as a monomer.

Specifically, the poly(3-hydroxyalkanoate)-based resin is a resin including the 3-hydroxyalkanoic acid as a structural unit.

The poly(3-hydroxyalkanoate)-based resin is a biodegradable polymer.

It should be noted that being "biodegradable" in the present embodiment means being able to be decomposed into low molecular weight compounds by microorganisms in a natural environment. Being biodegradable or not can be determined based on tests suited for different environments. Specifically, for example, ISO 14855 (compost) and ISO 14851 (activated sludge) are suited for an aerobic condition, and ISO 14853 (aqueous phase) and ISO 15985 (solid phase) are suited for an anaerobic condition. Also, biodegradability by microorganisms in seawater can be evaluated by biochemical oxygen demand measurement.

The poly(3-hydroxyalkanoate)-based resin includes a copolymer including a 3-hydroxybutyrate unit.

In the copolymer including the 3-hydroxybutyrate unit, examples of a monomer unit included therein other than the 3-hydroxybutyrate unit include a hydroxyalkanoate unit other than the 3-hydroxybutyrate unit.

Examples of the hydroxyalkanoate unit other than the 3-hydroxybutyrate unit include 3-hydroxyhexanoate, 3-hydroxyoctanoate, 3-hydroxyoctadecanoate, 3-hydroxyvalerate, and 4-hydroxybutyrate.

Examples of the copolymer including the 3-hydroxybutyrate unit include P3HB3HH, P3HB3HV, P3HB4HB, poly(3-hydroxybutyrate-co-3-hydroxyoctanoate), and poly(3-hydroxybutyrate-co-3-hydroxyoctadecanoate).

In the description herein, P3HB3HH means poly(3-hydroxybutyrate-co-3-hydroxyhexanoate).

P3HB3HV herein means poly(3-hydroxybutyrate-co-3-hydroxyvalerate).

P3HB4HB herein means poly(3-hydroxybutyrate-co-4-hydroxybutyrate).

The poly(3-hydroxyalkanoate)-based resin may include only one kind of copolymer including the 3-hydroxybutyrate unit, or may include two or more kinds of copolymers including the 3-hydroxybutyrate unit.

P3HB3HH is preferable as the copolymer including the 3-hydroxybutyrate unit.

The resin composition preferably contains 50% by mass or greater of the copolymer including the 3-hydroxybutyrate unit, more preferably contains 80% by mass or greater thereof, and even more preferably contains 90% by mass or greater thereof.

In the poly(3-hydroxyalkanoate)-based resin, the content ratio of the 3-hydroxybutyrate unit is greater than or equal to 80.0% by mole and less than or equal to 93.5% by mole, preferably greater than or equal to 82.0% by mole and less than or equal to 93.0% by mole, and more preferably greater than or equal to 85.0% by mole and less than or equal to 91.6% by mole.

As a result of the content ratio of the 3-hydroxybutyrate unit in the poly(3-hydroxyalkanoate)-based resin being greater than or equal to 80.0% by mole, the stiffness of the fibers is increased.

As a result of the content ratio of the 3-hydroxybutyrate unit in the poly(3-hydroxyalkanoate)-based resin being less than or equal to 93.5% by mole, the melt-blown nonwoven fabric according to the present embodiment is tear-resistant. Also, as a result of the content ratio of the 3-hydroxybutyrate unit in the poly(3-hydroxyalkanoate)-based resin being less than or equal to 93.5% by mole, fluffing of the melt-blown nonwoven fabric according to the present embodiment is reduced.

It should be noted that the content ratio of the 3-hydroxybutyrate unit in the poly(3-hydroxyalkanoate)-based resin means the content ratio of the 3-hydroxybutyrate unit in the entire poly(3-hydroxyalkanoate)-based resin included in the nonwoven fabric.

The content ratio of the 3-hydroxybutyrate unit in the poly(3-hydroxyalkanoate)-based resin can be determined in a manner described below.

First, 2 mL of a mixed solution of sulfuric acid and methanol (the volume of sulfuric acid : the volume of methanol = 15 : 85) and 2 mL of chloroform were added to 20 mg of dried poly(3-hydroxyalkanoate)-based resin of the melt-blown nonwoven fabric. The resulting sample was sealed in a container. The sample in the sealed container was heated at 100°C for 140 minutes, and thereby a first reaction solution was obtained, the first reaction solution containing a methyl ester that was a degradation product of the poly(3-hydroxyalkanoate)-based resin.

Then, the first reaction solution was cooled, and 1.5 g of sodium hydrogen carbonate was added to the cooled first reaction solution little by little for neutralization. The first reaction solution to which 1.5 g of sodium hydrogen carbonate had been thus added was left stand until generation of carbon dioxide stopped. In this manner, a second reaction solution was obtained.

Further, 4 mL of diisopropyl ether was added to and mixed well with the second reaction solution, and thereby a mixture was obtained.

Next, the mixture was subjected to centrifugal separation, and thereby a supernatant solution was obtained.

Then, the monomer unit composition of the degradation product in the supernatant solution was analyzed by capillary gas chromatography under the conditions indicated below, and thereby the content ratio of the 3-hydroxybutyrate unit in the poly(3-hydroxyalkanoate)-based resin was determined.

Gas chromatograph: GC-17A available from Shimadzu Corporation

Capillary column: NEUTRA BOND-1 (column length: 25 m, column inner diameter: 0.25 mm, liquid film thickness: 0.4 µm) available from GL Sciences Inc.

Carrier gas: He

Column inlet pressure: 100 kPa

Sample amount: 1 µL

As the temperature condition, the temperature was raised from 100°C to 200°C at the rate of 8 °C/min, and then raised from 200°C to 290°C at the rate of 30 °C/min.

The content ratio of the 3-hydroxybutyrate unit in the entire poly(3-hydroxyalkanoate)-based resin included in a raw material composition (the "raw material composition" will be described below) may be the content ratio of the 3-hydroxybutyrate unit in the poly(3-hydroxyalkanoate)-based resin in the melt-blown nonwoven fabric.

In light of improvement in the mechanical characteristics of the melt-blown nonwoven fabric, the poly(3-hydroxyalkanoate)-based resin preferably includes a poly(3-hydroxyalkanoate)-based resin component in which the content ratio of the 3-hydroxybutyrate unit is less than or equal to 76% by mole.

The content ratio of the 3-hydroxybutyrate unit in the poly(3-hydroxyalkanoate)-based resin component is 0 to 76% by mole, preferably 1 to 76% by mole, and more preferably 50 to 76% by mole.

Preferable examples of the poly(3-hydroxyalkanoate)-based resin component include poly(3-hydroxybutyrate-co-3-hydroxyhexanoate) and poly(3-hydroxybutyrate-co-4-hydroxybutyrate).

### (MIBK Fractionation Technique)

The poly(3-hydroxyalkanoate)-based resin component being included in the poly(3-hydroxyalkanoate)-based resin can be confirmed by using, for example, solvent fractionation technique that utilizes a difference in solubility into methyl isobutyl ketone (MIBK) (this technique is referred to also as "MIBK fractionation technique").

Specifically, with the MIBK fractionation technique, the poly(3-hydroxyalkanoate)-based resin can be fractionated into a MIBK-soluble fraction and a MIBK-insoluble fraction. If the content ratio of the 3-hydroxybutyrate unit in either one of these fractions is less than or equal to 76% by mole, it can be confirmed that the poly(3-hydroxyalkanoate)-based resin includes the poly(3-hydroxyalkanoate)-based resin component.

Specific steps of the fractionation are described hereinafter. First, about 100 mg of the poly(3-hydroxyalkanoate)-based resin is weighted out into a screw-top test tube, into which 10 ml of MIBK is added and which is then closed with a cap. Subsequently, the test tube is heated at 140°C for about 1 to 3 hours under shaking to dissolve the poly(3-hydroxyalkanoate)-based resin completely. After the complete dissolution, the test tube is left stand at 25°C for one minute to cool the solution to a temperature equal to or lower than the boiling point. Then, the entire solution is quickly transferred to a centrifuge tube whose weight has been premeasured, and the centrifuge tube is closed with a cap. The centrifuge tube closed with the cap is left stand at 25°C for 15 minutes, so that part of the dissolved matter is deposited. The deposit and the solution are separated by centrifugal separation (9000 rpm, 5 minutes), and the entire solution is transferred to an aluminum cup whose weight has been premeasured. Into the centrifuge tube in which the deposit is left, 10 ml of MIBK is added, which is then mixed by a vortex mixer and subjected to centrifugal separation again (9000 rpm, 5 minutes). The resulting solution is transferred to the aluminum cup already containing the aforementioned solution. The aluminum cup is heated at 120°C for 30 minutes to vaporize MIBK, so that the dissolved matter is deposited. Further, the deposit remaining in the aluminum cup and the deposit remaining in the centrifuge tube are each vacuum-dried at 100°C for 6 hours. The deposit remaining in the aluminum cup is weighed as the MIBK-soluble fraction, and the deposit remaining in the centrifuge tube is weighed as the MIBK-insoluble fraction. The weighing is followed by confirming that the difference between the total weight of the MIBK-soluble and MIBK-insoluble fractions and the initially measured weight of the poly(3-hydroxyalkanoate)-based resin is within ±3%.

The content ratio of the 3-hydroxybutyrate unit in each of the MIBK-soluble fraction and the MIBK-insoluble fraction can be measured in the above-described manner.

The content ratio of the 3-hydroxybutyrate unit in either the MIBK-soluble fraction or the MIBK-insoluble fraction is preferably 0 to 76% by mole, more preferably 1 to 76% by mole, and even more preferably 50 to 76% by mole.

Examples of the poly(3-hydroxyalkanoate)-based resin other than the copolymer including the 3-hydroxybutyrate unit include P3HB, poly(3-hydroxyvalerate), and poly (3-hydroxyhexanoate).

P3HB herein means poly(3-hydroxybutyrate), which is a homopolymer.

It should be noted that P3HB has a function to facilitate crystallization of P3HB itself and also crystallization of the poly(3-hydroxyalkanoate)-based resin other than P3HB.

The aforementioned another polymer is preferably biodegradable.

Examples of this other polymer that is biodegradable include polycaprolactone, polylactic acid, polybutylene succinate, polybutylene succinate adipate, polybutylene adipate terephthalate, polyethylene succinate, polyvinyl alcohol, polyglycolic acid, unmodified starch, modified starch, cellulose acetate, and chitosan.

The polycaprolactone is a polymer obtained by ring-opening polymerization of ε-caprolactone.

The resin composition may include one kind of this other polymer, or two or more kinds of these other polymers.

Thus, the melt-blown nonwoven fabric according to the present embodiment includes the biodegradable polymer(s). Therefore, even if the melt-blown nonwoven fabric is discarded in an environment, since the melt-blown nonwoven fabric is readily decomposed in the environment, the load on the environment can be reduced.

The resin composition may further contain an additive.

Examples of the additive include a crystal nucleating agent, a lubricant, a stabilizer (such as an antioxidant or ultraviolet absorber), a colorant (such as a dye or pigment), a plasticizer, an inorganic filler, an organic filler, and an antistatic agent.

Preferably, the resin composition contains a crystal nucleating agent as the additive.

The crystal nucleating agent is a compound that can facilitate crystallization of the poly(3-hydroxyalkanoate)-based resin. The crystal nucleating agent has a melting point higher than that of the poly(3-hydroxyalkanoate)-based resin.

Since the resin composition contains the crystal nucleating agent, at the time of fabrication of the melt-blown nonwoven fabric by melt-blown technique, crystallization of the poly(3-hydroxyalkanoate)-based resin is facilitated, and the fibers that are adjacent to each other are not easily fused to each other. This consequently makes it possible to readily reduce the coefficient of variation of the fiber diameters of the fibers.

Examples of the crystal nucleating agent include: inorganic substances (e.g., boron nitride, titanium oxide, talc, layered silicate, calcium carbonate, sodium chloride, metal phosphate, etc.); sugar alcohol compounds derived from natural products (e.g., pentaerythritol, erythritol, galactitol, mannitol, arabitol, etc.); polyvinyl alcohol; chitin; chitosan; polyethylene oxides; aliphatic carboxylates; aliphatic alcohols; aliphatic carboxylic acid esters; dicarboxylic acid derivatives (e.g., dimethyl adipate, dibutyl adipate, di-isodecyl adipate, dibutyl sebacate, etc.); cyclic compounds having, in their molecule, C = O and a functional group selected from the group consisting of NH, S, and O (e.g., indigo, quinacridone, quinacridone magenta, etc.); sorbitol derivatives (e.g., bis-benzylidene sorbitol, bis(p-methylbenzylidene)sorbitol, etc.); compounds containing a nitrogen-containing heteroaromatic nucleus (e.g., pyridine ring, triazine ring, imidazole ring, etc.) (e.g., pyridine, triazine, imidazole, etc.); phosphate ester compounds; bisamides of higher fatty acids; metal salts of higher fatty acids; and branched polylactic acid.

It should be noted that P3HB, which is the poly(3-hydroxyalkanoate)-based resin, can be used as the crystal nucleating agent.

One of these crystal nucleating agents may be used alone, or two or more of these crystal nucleating agents may be used in combination.

As the crystal nucleating agent, sugar alcohol compounds, polyvinyl alcohol, chitin, and chitosan are preferable in light of the effect of improving the crystallization rate of the poly(3-hydroxyalkanoate)-based resin as well as in light of compatibility and affinity with the poly(3-hydroxyalkanoate)-based resin.

Among the sugar alcohol compounds, pentaerythritol is preferable.

The crystal nucleating agent preferably has a crystal structure at normal temperature (25°C).

Since the crystal nucleating agent has a crystal structure at normal temperature (25°C), the crystallization of the poly(3-hydroxyalkanoate)-based resin is further facilitated, which is advantageous.

The crystal nucleating agent that has a crystal structure at normal temperature (25°C) is preferably powdery at normal temperature (25°C).

Further, the crystal nucleating agent that is powdery at normal temperature (25°C) preferably has a mean particle diameter of 10 µm or less.

The resin composition contains the crystal nucleating agent in an amount of preferably 0.1 parts by mass or greater, more preferably 0.3 parts by mass or greater, and even more preferably 0.5 parts by mass or greater, with respect to 100 parts by mass of the poly(3-hydroxyalkanoate)-based resin.

Since the resin composition contains the crystal nucleating agent in an amount of 0.1 parts by mass or greater with respect to 100 parts by mass of the poly(3-hydroxyalkanoate)-based resin, at the time of fabrication of the melt-blown nonwoven fabric by melt-blown technique, the crystallization of the poly(3-hydroxyalkanoate)-based resin is even further facilitated, which is advantageous.

Also, the resin composition contains the crystal nucleating agent in an amount of preferably 2.5 parts by mass or less, more preferably 2.0 parts by mass or less, with respect to 100 parts by mass of the poly(3-hydroxyalkanoate)-based resin.

Since the resin composition contains the crystal nucleating agent in an amount of 2.5 parts by mass or less with respect to 100 parts by mass of the poly(3-hydroxyalkanoate)-based resin, at the time of fabrication of the melt-blown nonwoven fabric by melt-blown technique, the fibers can be readily obtained, which is advantageous.

It should be noted that P3HB is the poly(3-hydroxyalkanoate)-based resin, and can also function as the crystal nucleating agent. Therefore, in a case where the resin composition contains P3HB, the amount of the P3HB is included in both the amount of the poly(3-hydroxyalkanoate)-based resin and the amount of the crystal nucleating agent.

The resin composition preferably contains the lubricant.

As a result of the lubricant being included in the fibers, the slipperiness of the fibers at the time of fabrication of the melt-blown nonwoven fabric by melt-blown technique is improved, which makes it possible to suppress the fibers from being fused to each other.

On the other hand, in a case where the resin composition contains no lubricant or contains a very small amount of lubricant, for example, the adhesiveness of the nonwoven fabric to a tape is increased, and consequently, in the process of producing the nonwoven fabric, the nonwoven fabric is easy to handle, which is advantageous.

Whether or not to add the lubricant and the additive amount thereof can be suitably determined in accordance with the use application of the melt-blown nonwoven fabric.

The lubricant is, for example, a compound having an amide bond.

The compound having an amide bond preferably includes at least one selected from the group consisting of lauric acid amide, myristic acid amide, stearic acid amide, behenic acid amide, and erucic acid amide.

The resin composition contains the lubricant in an amount of preferably 0.05 parts by mass or greater, more preferably 0.1 parts by mass or greater, and even more preferably 0.5 parts by mass or greater, with respect to 100 parts by mass of the polymer component. Since the resin composition contains the lubricant in an amount of 0.05 parts by mass or greater with respect to 100 parts by mass of the polymer component, at the time of fabrication of the melt-blown nonwoven fabric by melt-blown technique, the fibers can be further suppressed from being fused to each other, which is advantageous.

On the other hand, in a case where the content of the lubricant in the resin composition is 0 to 0.2 parts by mass with respect to 100 parts by mass of the polymer component, the adhesiveness of the nonwoven fabric to a tape is increased, and consequently, in the process of producing the nonwoven fabric, the nonwoven fabric is easy to handle, which is advantageous.

Also, the resin composition contains the lubricant in an amount of preferably 12 parts by mass or less, more preferably 10 parts by mass or less, even more preferably 8 parts by mass or less, and most preferably 5 parts by mass or less, with respect to 100 parts by mass of the polymer component. Since the resin composition contains the lubricant in an amount of 12 parts by mass or less with respect to 100 parts by mass of the polymer component, the lubricant can be suppressed from bleeding out on the surface of the fibers, which is advantageous.

The melt mass-flow rate (MFR) of the resin composition at 165°C is preferably 50 to 1500 g/10min, more preferably 70 to 1500 g/10min, even more preferably 80 to 1300 g/10min, and particularly preferably 80 to 1200 g/10min.

As a result of the melt mass-flow rate of the resin composition in the fibers at 165°C being less than or equal to 1500 g/10min, the strength and stretchability of the melt-blown nonwoven fabric are increased.

As a result of the melt mass-flow rate of the resin composition in the fibers at 165°C being greater than or equal to 50 g/10min, at the time of drawing a fibrous molten product, tensile force applied to the fibrous molten product can be reduced, which makes it possible to readily reduce the fiber diameters of the fibers in the obtained melt-blown nonwoven fabric. Consequently, the particle filtration efficiency of the melt-blown nonwoven fabric can be readily increased.

It should be noted that the melt mass-flow rate (MFR) of the resin composition at 165°C is determined in the following manner: determining the melt volume-flow rate (MVR) of the resin composition at 165°C in accordance with the method B of ASTM-D1238 (ISO1133-1, JIS K7210-1:2011); and then determining the melt mass-flow rate (MFR) of the resin composition at 165°C from the determined melt volume-flow rate (MVR) of the resin composition at 165°C and the density of the resin composition.

Here, the melt volume-flow rate (MVR) of the resin composition at 165°C is measured in the following manner: heating 5 g or more of the resin composition at 165°C for four minutes; and then measuring the melt volume-flow rate (MVR) of the resin composition while applying a load of 5 kg onto the heated resin composition.

The weight-average molecular weight of the resin composition is preferably 100,000 to 250,000, more preferably 110,000 to 200,000, and even more preferably 110,000 to 180,000.

As a result of the weight-average molecular weight of the resin composition in the fibers being greater than or equal to 100,000, the strength and stretchability of the melt-blown nonwoven fabric are increased.

As a result of the weight-average molecular weight of the resin composition in the fibers being less than or equal to 250,000, at the time of drawing a fibrous molten product, tensile force applied to the fibrous molten product can be reduced, which makes it possible to readily reduce the fiber diameters of the fibers in the obtained melt-blown nonwoven fabric. Consequently, the particle filtration efficiency of the melt-blown nonwoven fabric can be readily increased.

It should be noted that the weight-average molecular weight in the present embodiment is measured based on a molecular weight distribution in terms of polystyrene by using gel permeation chromatography (GPC) using a chloroform eluent. A column used in the GPC may be any column suitable for measuring the molecular weight.

The average value of the fiber diameters of the fibers is less than or equal to 8.0 µm, preferably less than or equal to 5.0 µm, more preferably less than or equal to 3.3 µm, and even more preferably less than or equal to 3.0 µm.

The average value of the fiber diameters of the fibers is preferably 0.50 to 8.0 µm, more preferably 0.50 to 5.0 µm, even more preferably 0.50 to 3.3 µm, yet more preferably 0.50 to 3.0 µm, particularly preferably 0.80 to 2.8 µm, and more particularly preferably 1.0 to 2.6 µm.

The coefficient of variation of the fiber diameters of the fibers is preferably less than or equal to 0.40, more preferably less than or equal to 0.36, and even more preferably less than or equal to 0.32. Also, the coefficient of variation of the fiber diameters of the fibers is, for example, greater than or equal to 0.10.

As a result of the average value of the fiber diameters of the fibers being less than or equal to 8.0 µm, the particle filtration efficiency of the melt-blown nonwoven fabric is increased.

As a result of the average value of the fiber diameters of the fibers being greater than or equal to 0.50 µm, the strength and stretchability of the melt-blown nonwoven fabric are increased.

As a result of the coefficient of variation of the fiber diameters of the fibers being less than or equal to 0.40, excessively thick fibers are reduced in the melt-blown nonwoven fabric, and consequently, the particle filtration efficiency of the melt-blown nonwoven fabric is further increased. Also, as a result of the coefficient of variation of the fiber diameters of the fibers being less than or equal to 0.40, excessively thin fibers are reduced in the melt-blown nonwoven fabric, and consequently, the strength and stretchability of the melt-blown nonwoven fabric are increased.

It should be noted that the average value and the coefficient of variation of the fiber diameters of the fibers can be determined in a manner described below.

First, a test piece is obtained from the melt-blown nonwoven fabric.

Next, photographs (magnification: 1700x) of the surface of the test piece at five different locations on the surface of the test piece are taken by a scanning electron microscope.

Then, 20 or more fibers are randomly selected in each photograph, and the diameter (width) of each of the selected fibers is measured.

Next, based on the measured diameter (width) values of all the selected fibers, an arithmetic average value and a coefficient of variation (= standard deviation / arithmetic average value) are determined.

The areal weight of the melt-blown nonwoven fabric according to the present embodiment is preferably 20 to 80 g/m², more preferably 25 to 77 g/m², and even more preferably 30 to 75 g/m².

As a result of the areal weight of the melt-blown nonwoven fabric according to the present embodiment being greater than or equal to 20 g/m², the strength and stretchability of the melt-blown nonwoven fabric are increased as well as the particle filtration efficiency of the melt-blown nonwoven fabric is further increased.

Also, as a result of the areal weight of the melt-blown nonwoven fabric according to the present embodiment being less than or equal to 80 g/m², the solution permeability (e.g., water permeability) or air permeability of the melt-blown nonwoven fabric can be increased.

It should be noted that the areal weight of the melt-blown nonwoven fabric according to the present embodiment can be determined in a manner described below.

First, a test piece is obtained from the melt-blown nonwoven fabric according to the present embodiment.

The size of the test piece may be, for example, 100 mm × 100 mm, or 200 mm × 200 mm.

Next, the weight of the test piece is measured by an electronic balance or the like.

Then, the measured weight of the test piece is divided by the area of the test piece to calculate the areal weight.

The thickness of the melt-blown nonwoven fabric according to the present embodiment is preferably 0.10 to 0.40 mm, and more preferably 0.15 to 0.35 mm.

As a result of the thickness of the melt-blown nonwoven fabric according to the present embodiment being 0.10 to 0.40 mm, the melt-blown nonwoven fabric having uniform quality can be readily obtained at the time of fabrication of the melt-blown nonwoven fabric.

Also, as a result of the thickness of the melt-blown nonwoven fabric according to the present embodiment being greater than or equal to 0.10 mm, the strength and stretchability of the melt-blown nonwoven fabric are increased as well as the particle filtration efficiency of the melt-blown nonwoven fabric is further increased.

Further, as a result of the thickness of the melt-blown nonwoven fabric according to the present embodiment being less than or equal to 0.40 mm, the solution permeability (e.g., water permeability) or air permeability of the melt-blown nonwoven fabric can be increased.

It should be noted that the thickness of the melt-blown nonwoven fabric according to the present embodiment can be determined in the following manner: measuring the thickness of the melt-blown nonwoven fabric at three or more locations thereon by a thickness gauge; and then determining the arithmetic average value thereof as the thickness of the melt-blown nonwoven fabric.

The thickness gauge used herein is, for example, "PEACOCK" available from OZAKI MFG. CO., LTD.

The melt-blown nonwoven fabric according to the present embodiment has an average pore diameter of preferably greater than or equal to 2.5 µm and less than or equal to 10.0 µm, and more preferably greater than or equal to 3.0 µm and less than or equal to 7.0 µm.

As a result of the average pore diameter of the melt-blown nonwoven fabric according to the present embodiment being greater than or equal to 2.5 µm, the solution permeability (e.g., water permeability) or air permeability of the melt-blown nonwoven fabric can be increased.

As a result of the average pore diameter of the melt-blown nonwoven fabric according to the present embodiment being less than or equal to 10.0 µm, the particle filtration efficiency of the melt-blown nonwoven fabric is further increased.

The average pore diameter of the melt-blown nonwoven fabric according to the present embodiment is a mean flow pore diameter determined in accordance with JIS K3832-1990 "Testing methods for bubble point of membrane filters".

The mean flow pore diameter can be measured by using, for example, Penn-Porometer (available from Porous Materials, Inc.).

The tensile elongation at break in the MD direction of the melt-blown nonwoven fabric according to the present embodiment (which may hereinafter be simply referred to as "MD elongation") is preferably greater than or equal to 50%, more preferably greater than or equal to 100%, even more preferably greater than or equal to 120%, and particularly preferably greater than or equal to 150%. The MD elongation of the melt-blown nonwoven fabric according to the present embodiment is, for example, less than or equal to 500%.

As a result of the MD elongation being greater than or equal to 50%, the melt-blown nonwoven fabric according to the present embodiment is tear-resistant even when being pulled in the MD direction.

As a result of the content ratio of the 3-hydroxybutyrate unit in the poly(3-hydroxyalkanoate)-based resin being less than or equal to 93.5% by mole, an increase in the MD elongation is facilitated.

The tensile elongation at break in the CD direction of the melt-blown nonwoven fabric according to the present embodiment (which may hereinafter be simply referred to as "CD elongation") is preferably greater than or equal to 50%, more preferably greater than or equal to 100%, even more preferably greater than or equal to 120%, and particularly preferably greater than or equal to 150%. The CD elongation of the melt-blown nonwoven fabric according to the present embodiment is, for example, less than or equal to 500%.

As a result of the CD elongation being greater than or equal to 50%, the melt-blown nonwoven fabric according to the present embodiment is tear-resistant even when being pulled in the CD direction.

As a result of the content ratio of the 3-hydroxybutyrate unit in the poly(3-hydroxyalkanoate)-based resin being less than or equal to 93.5% by mole, an increase in the CD elongation is facilitated.

As a result of the tensile elongation at break in the MD direction of the melt-blown nonwoven fabric being greater than or equal to 120% and the tensile elongation at break in the CD direction of the melt-blown nonwoven fabric being greater than or equal to 120%, the melt-blown nonwoven fabric is made more tear-resistant.

The MD direction herein means the direction (Machine Direction) in which the melt-blown nonwoven fabric moves during the production of the melt-blown nonwoven fabric.

The CD direction herein means the direction perpendicular to the MD direction.

The tensile elongation at break is referred to also as tensile breaking elongation.

The ratio of the tensile elongation at break in the CD direction of the melt-blown nonwoven fabric to the tensile elongation at break in the MD direction of the melt-blown nonwoven fabric (i.e., CD elongation / MD elongation) is preferably 0.50 to 2.00 and more preferably 0.56 to 1.80.

As a result of the CD elongation / MD elongation being 0.50 to 2.00, when a stress is applied to the melt-blown nonwoven fabric according to the present embodiment, the stress is suppressed from concentrating only in either one of the CD direction or the MD direction of the melt-blown nonwoven fabric. Consequently, the melt-blown nonwoven fabric is made tear-resistant.

As a result of the content ratio of the 3-hydroxybutyrate unit in the poly(3-hydroxyalkanoate)-based resin being less than or equal to 93.5% by mole, the CD elongation / MD elongation readily falls within the range of 0.50 to 2.00.

It should be noted that the tensile elongation at break can be measured by using a constant rate extension type tension testing machine that accords with JIS B7721:2018 "Tension/compression testing machines - Calibration and verification of the force-measuring system". It should be noted that the constant rate extension type tension testing machine used herein may be, for example, a universal tester (RTG-1210 available from A&D Company, Limited).

Specifically, the tensile elongation at break can be determined in a manner described below.

First, a test piece is (width: 8 mm, length: 40 mm) is cut out from the melt-blown nonwoven fabric.

Next, the test piece with an initial load applied thereto is attached to the constant rate extension type tension testing machine, i.e., gripped by grips of the tension testing machine, with the length of the test piece between the grips being 20 mm. In other words, at a time when the initial load is applied to the test piece, the length of the test piece between the grips is 20 mm. Here, the initial load is applied to the test piece by pulling the test piece by hand to such an extent that sagging does not occur.

Then, a load is applied to the test piece at a tensile speed of 20 mm/min until the test piece breaks.

Next, the tensile elongation at break is determined by using an equation shown below. Tensile elongation at break (%) = [(the length of the test piece between the grips at break - the length of the test piece between the grips at initial load)/the length of the test piece between the grips at initial load] × 100 (%)

The melt-blown nonwoven fabric according to the present embodiment is suitably usable as, for example, a material of a filter.

Examples of the filter include a removal filter to remove particles (e.g., particles to which viruses or the like are attached, pollen, etc.) (e.g., a filter for a face mask), a blood filter to filter out blood cells, and a beverage extraction filter (e.g., a coffee dripping filter or a tea bag).

Two or more pieces of the melt-blown nonwoven fabric according to the present embodiment may be layered together, which may be used as, for example, a material of the filter.

### <Layered Body>

A layered body according to the present embodiment includes: a first nonwoven fabric; and a second nonwoven fabric layered over at least one surface of the first nonwoven fabric.

The first nonwoven fabric is the melt-blown nonwoven fabric according to the present embodiment.

The second nonwoven fabric includes cellulosic fibers.

Examples of the cellulosic fibers include cotton fibers, rayon (a concept encompassing cupra (which is referred to also as "copper ammonia rayon") and the like) fibers, and acetate fibers.

As a result of including the first nonwoven fabric, the layered body has increased particle filtration efficiency, and as a result of further including the second nonwoven fabric, the layered body has further increased strength.

Examples of the second nonwoven fabric include a spun-lace nonwoven fabric.

### <Filter for Face Mask>

A filter for a face mask according to the present embodiment is formed from the melt-blown nonwoven fabric according to the present embodiment, or formed from the layered body according to the present embodiment.

### <Face Mask>

A face mask according to the present embodiment may include: a mask body; and the filter for a face mask according to the present embodiment.

The mask body includes: a pair of ear loops; and a holder to hold the filter for a face mask.

The face mask according to the present embodiment may be configured such that the filter for a face mask is attachable to and detachable from the holder.

Alternatively, the face mask according to the present embodiment may be configured such that the mask body and the filter for a face mask are integrated together.

Further, the face mask according to the present embodiment may be a disposable face mask.

The face mask according to the present embodiment may have a structure including two or more layers in which the melt-blown nonwoven fabric according to the present embodiment and a base material sheet are layered together.

Specifically, the face mask according to the present embodiment may have a three-layer structure in which a piece of the base material sheet, the melt-blown nonwoven fabric according to the present embodiment, and another piece of the base material sheet are layered together in this order.

The base material sheet includes fibers.

The base material sheet is, for example, a nonwoven fabric or a woven fabric.

Examples of the fibers in the base material sheet include cellulosic fibers, polypropylene-based fibers (PP-based fibers), polyethylene terephthalate-based fibers (PET-based fibers), and polybutylene terephthalate-based fibers (PBT-based fibers).

Examples of the cellulosic fibers as the fibers in the base material sheet include cotton fibers, rayon (a concept encompassing cupra (which is referred to also as "copper ammonia rayon") and the like) fibers, and acetate fibers.

The fibers in the base material sheet may be filament fibers, or may be staple fibers.

The nonwoven fabric as the base material sheet is, for example, a spun-bond nonwoven fabric or a spun-lace nonwoven fabric.

The woven fabric as the base material sheet is, for example, gauze. Gauze includes cotton fibers.

The nonwoven fabric as the base material sheet including the cellulosic fibers is, for example, a nonwoven fabric produced by wet staple fiber spun-bond technique.

The nonwoven fabric produced by wet staple fiber spun-bond technique is, for example, a nonwoven fabric of TCF (registered trademark) series (available from FUTAMURA CHEMICAL CO., LTD.). The nonwoven fabric of TCF (registered trademark) series is a nonwoven fabric produced by TCF (registered trademark) technique.

The fibers included in the spun-lace nonwoven fabric are, for example, cellulosic fibers, specifically, rayon fibers.

The fibers included in the spun-bond nonwoven fabric are, for example, polypropylene-based fibers (PP-based fibers), polyethylene terephthalate-based fibers (PET-based fibers), or polybutylene terephthalate-based fibers (PBT-based fibers).

The face mask according to the present embodiment has, for example, a three-layer structure in which a piece of the spun-bond nonwoven fabric, the melt-blown nonwoven fabric according to the present embodiment, and another piece of the spun-bond nonwoven fabric are layered together in this order. That is, the face mask according to the present embodiment has a SMS three-layer structure. In other words, the face mask may be a SMS face mask.

The face mask according to the present embodiment may include the second nonwoven fabric and/or a woven fabric.

The face mask according to the present embodiment may have a three-layer structure in which a piece of the second nonwoven fabric or the woven fabric, the melt-blown nonwoven fabric according to the present embodiment, and another piece of the second nonwoven fabric or the woven fabric are layered together in this order.

In other words, in the face mask according to the present embodiment, the second nonwoven fabric and/or the woven fabric may be used instead of the spun-bond nonwoven fabric in the SMS face mask.

### <Method of Producing Melt-Blown Nonwoven Fabric>

A method of producing a melt-blown nonwoven fabric according to the present embodiment is a method of producing the melt-blown nonwoven fabric by melt-blown technique.

The method of producing a melt-blown nonwoven fabric according to the present embodiment includes: a step (A) of obtaining a molten product by heat-melting a raw material composition; and a step (B) of obtaining the melt-blown nonwoven fabric from the molten product.

It should be noted that the melt-blown technique is a concept encompassing spun-blown (registered trademark) technique.

The melt mass-flow rate (MFR) of the raw material composition at 165°C is preferably 30 to 1500 g/10min, more preferably 30 to 1000 g/10min, even more preferably 50 to 1000 g/1Omin, and particularly preferably 50 to 800 g/10min.

As a result of the melt mass-flow rate of the raw material composition at 165°C being less than or equal to 1500 g/10min, the strength and stretchability of the melt-blown nonwoven fabric are further increased.

As a result of the melt mass-flow rate of the raw material composition at 165°C being greater than or equal to 30 g/10min, at the time of drawing a fibrous molten product, tensile force applied to the fibrous molten product can be reduced, which makes it possible to readily reduce the fiber diameters of the fibers in the obtained melt-blown nonwoven fabric. Consequently, the particle filtration efficiency of the melt-blown nonwoven fabric is further increased.

It should be noted that the melt mass-flow rate (MFR) of the raw material composition at 165°C is determined in the following manner: determining the melt volume-flow rate (MVR) of the raw material composition at 165°C in accordance with the method B of ASTM-D1238 (ISO1133-1, JIS K7210-1:2011); and then determining the melt mass-flow rate (MFR) of the raw material composition at 165°C from the determined melt volume-flow rate

(MVR) of the raw material composition at 165°C and the density of the raw material composition.

Here, the melt volume-flow rate (MVR) of the raw material composition at 165°C is measured in the following manner: heating 5 g or more of the raw material composition at 165°C for four minutes; and then measuring the melt volume-flow rate (MVR) of the raw material composition while applying a load of 5 kg onto the heated resin composition.

The weight-average molecular weight of the raw material composition is preferably 100,000 to 350,000, more preferably 110,000 to 300,000, and even more preferably 110,000 to 250,000.

As a result of the weight-average molecular weight of the raw material composition being greater than or equal to 100,000, the strength and stretchability of the melt-blown nonwoven fabric are further increased.

As a result of the weight-average molecular weight of the raw material composition being less than or equal to 350,000, at the time of drawing a fibrous molten product, tensile force applied to the fibrous molten product can be reduced, which makes it possible to readily reduce the fiber diameters of the fibers in the obtained melt-blown nonwoven fabric. Consequently, the particle filtration efficiency of the melt-blown nonwoven fabric is further increased.

In the method of producing a melt-blown nonwoven fabric according to the present embodiment, a melt-blown nonwoven fabric producing apparatus is used to obtain the melt-blown nonwoven fabric from the raw material composition.

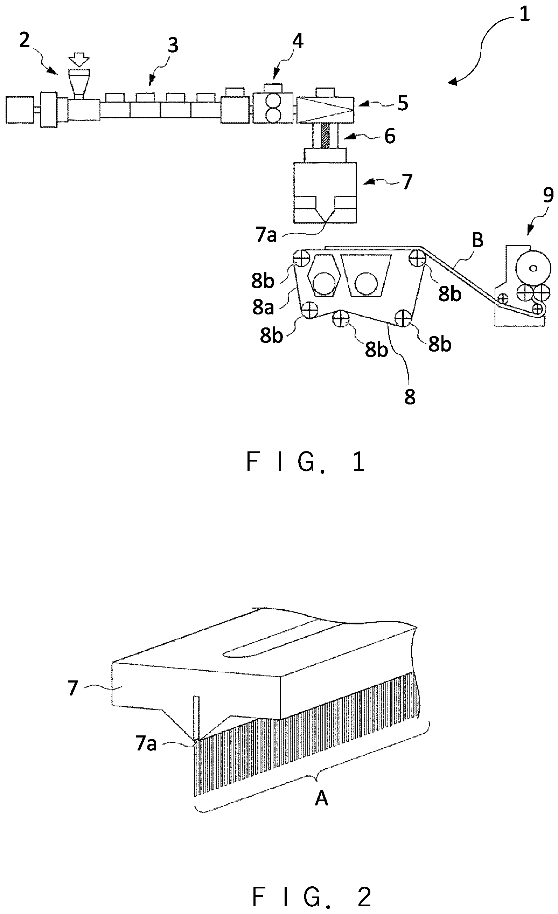

As shown in FIG. 1, the aforementioned melt-blown nonwoven fabric producing apparatus 1 includes: an extruder 3, which melts the raw material composition to obtain a molten product; a hopper 2, which feeds the raw material composition to the extruder 3; a kneader 6, which kneads the molten product to obtain the molten product in a kneaded state (which may hereinafter be referred to as "molten kneaded product"); a nozzle 7, which discharges the molten kneaded product in a fibrous form; a collector 8, which collects and cools the fibrous molten kneaded product to obtain a first melt-blown nonwoven fabric B; and a winder 9, which winds the first melt-blown nonwoven fabric B.

The melt-blown nonwoven fabric producing apparatus 1 may, as necessary, further include a gear pump 4, which feeds the molten product to the kneader 6.

As a result of the melt-blown nonwoven fabric producing apparatus 1 including the gear pump 4, the amount of the molten product fed to the kneader 6 can be suppressed from varying.

The melt-blown nonwoven fabric producing apparatus 1 may, as necessary, further include a filter 5, which removes extraneous matter from the molten product at a position upstream of the kneader 6.

In the step (A), the raw material composition is fed via the hopper 2 to the extruder 3, which melts the raw material composition, and thereby the molten product is obtained.

The raw material composition fed to the extruder 3 is preferably solid, and more preferably in the form of pellets.

Preferably, before being fed to the extruder 3, the raw material composition has been heated and dried in light of suppressing hydrolysis of the resin of the raw material composition and suppressing oxidation degradation of the resin of the raw material composition.

The amount of water in the raw material composition fed to the extruder 3 is preferably less than or equal to 200 ppmw.

At the time of drying the raw material composition, preferably, oxygen is removed from the atmosphere and from the raw material composition. At the drying, the atmosphere is preferably an inert gas (e.g., nitrogen gas) atmosphere.

In the step (A), the drying of the raw material composition may be performed before the raw material composition is fed to the hopper 2. Alternatively, the hopper 2 may be a hopper dryer, and the drying of the raw material composition may be performed by the hopper 2.

Examples of the extruder 3 include a single screw extruder, a co-rotating intermeshing twin screw extruder, a co-rotating non-intermeshing twin screw extruder, a counterrotating non-intermeshing twin screw extruder, and a multiple screw extruder.

The extruder 3 is preferably a single screw extruder for the following reasons: in the case of a single screw extruder, thermal degradation of the raw material composition during the extrusion can be readily suppressed since less resin stagnation occurs in a single screw extruder; and also, the equipment cost of a single screw extruder is less than that of the other types of extruders.

In the step (A), the molten product is fed via the filter 5 to the kneader 6 by the gear pump 4, and the molten product is kneaded by the kneader 6 to obtain the molten kneaded product.

The filter 5 is, for example, a screen mesh, a pleats filter, or a leaf disc filter.

The filter 5 is preferably a leaf disc filter in light of filtration accuracy, filtration area, and pressure resistance performance as well as for the reason that clogging due to extraneous matter is less likely to occur in the case of a leaf disc filter.

For example, a metal fiber sintered nonwoven fabric may be used as a filtering medium of the filter 5.

In the step (B), the molten kneaded product as the molten product is discharged in a fibrous form from the nozzle 7.

The nozzle 7 is a spinning die head.

In FIG. 2, the nozzle 7 includes a plurality of nozzle holes 7a, each of which discharges the molten kneaded product in a fibrous form. As shown in FIG. 2, the nozzle 7 discharges a plurality of fibrous molten kneaded products A.

It should be noted that the number of nozzle holes 7a included in the nozzle 7 may be one. That is, the number of original yarns A discharged from the nozzle 7 may be one.

The plurality of nozzle holes 7a include downward-facing openings, respectively.

The shape of the opening of each nozzle hole 7a is, for example, a circular shape (a concept encompassing a circle shape, an approximately circle shape, an ellipse shape, and an approximately ellipse shape).

The diameter of the opening of each nozzle hole 7a is suitably selected in accordance with the fiber diameter of each fiber in the melt-blown nonwoven fabric.

The diameter of the opening of each nozzle hole 7a is preferably greater than or equal to 0.05 mm, more preferably greater than or equal to 0.10 mm, and even more preferably greater than or equal to 0.12 mm.

Also, the diameter of the opening is preferably less than or equal to 1.0 mm, more preferably less than or equal to 0.50 mm, even more preferably less than 0.30 mm, and particularly preferably less than or equal to 0.25 mm.

The diameter of the opening means an arithmetic average value of the diameters of the openings.

The plurality of nozzle holes 7a of the nozzle 7 are spaced apart from each other and arranged in a line.

In FIG. 2, the plurality of nozzle holes 7a are arranged in one line.

It should be noted that the plurality of nozzle holes 7a may be arranged in two or more lines. In other words, the melt-blown technique may be spun-blown (registered trademark) technique.

The distance between the nozzle holes 7a that are adjacent to each other (hereinafter, this distance is referred to also as "space") is, for example, preferably greater than or equal to 0.05 mm, more preferably greater than or equal to 0.1 mm, and even more preferably greater than or equal to 0.25 mm.

Since the distance (space) between the nozzle holes 7a that are adjacent to each other is greater than or equal to 0.05 mm, the fibers that are adjacent to each other can be suppressed from being fused to each other. This consequently makes it possible to reduce the coefficient of variation of the fiber diameters of the fibers.

Also, the distance (space) between the nozzle holes 7a that are adjacent to each other is, for example, preferably less than or equal to 1.0 mm, more preferably less than or equal to 0.7 mm, and even more preferably less than or equal to 0.5 mm.

The distances between the nozzle holes 7a that are adjacent to each other may be either equal to each other or unequal to each other. However, preferably, the distances between the nozzle holes 7a that are adjacent to each other are equal to each other, because, in this case, a melt-blown nonwoven fabric having uniform quality can be readily produced.

The distance (space) between the nozzle holes 7a that are adjacent to each other means an arithmetic average value of the distances (spaces) between the nozzle holes 7a that are adjacent to each other.

The collector 8 includes a collecting surface to collect the fibrous kneaded products A.

The collector 8 is a conveyor.

The conveyor includes: a conveyor belt 8a including the collecting surface; and a plurality of rollers 8b to drive the conveyor belt 8a.

The collecting surface is positioned immediately below the nozzle holes 7a.

The conveyor belt 8a has air permeability. Specifically, the conveyor belt 8a is formed from a net-like material. That is, the collecting surface is a net-like surface.

It should be noted that the collector 8 may be configured differently, so long as the collector 8 includes a collecting unit. The collector 8 need not be the conveyor, but may be a collecting drum or a collecting net.

The distance between the collecting surface and the nozzle holes 7a (this distance is hereinafter referred to also as "DCD") is preferably greater than or equal to 20 mm, more preferably greater than or equal to 50 mm, and even more preferably greater than or equal to 80 mm.

Also, the distance (DCD) between the conveyor belt 8a as the collecting unit and the nozzle holes 7a is preferably less than or equal to 250 mm.

The distance (DCD) between the collecting surface and the nozzle holes 7a means an arithmetic average value of the distances (DCD) between the collecting surface and the respective nozzle holes 7a.

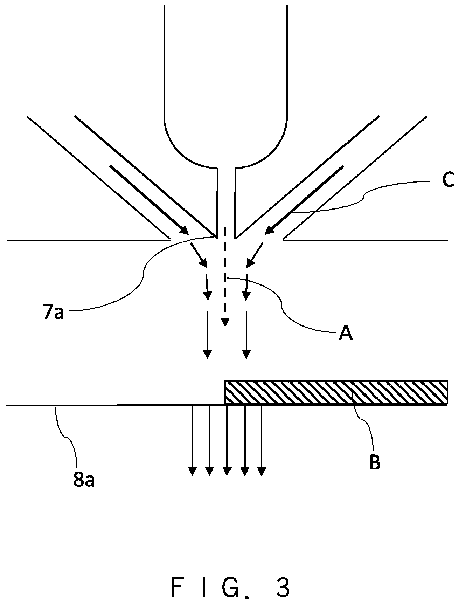

As shown in FIG. 3, the melt-blown nonwoven fabric producing apparatus 1 is configured to apply high-temperature gas C to the fibrous molten kneaded products A to draw the fibrous molten kneaded products A.

In the step (B), the high-temperature gas C is applied to the fibrous molten kneaded products A, and the high-temperature gas C that has been applied to the molten kneaded products A is passed through the net-like conveyor belt 8a.

In the step (B), to facilitate the passing of the high-temperature gas C that has been applied to the molten kneaded products A through the net-like conveyor belt 8a, the high-temperature gas C is preferably sucked by a suction device (not shown). This makes it possible to readily prevent the fibers from rebounding on the collecting surface of the net-like conveyor belt 8a. Consequently, the first melt-blown nonwoven fabric B in which the fibers are favorably fused to each other can be readily formed.

Further, in the step (B), the fibrous molten kneaded products A that have been drawn are collected by the conveyor belt 8a, then cooled while being transported by the conveyor belt 8a, and thereby the first melt-blown nonwoven fabric is obtained.

The material that forms the net-like collecting surface is not particularly limited, so long as the material has thermal resistance against the temperature conditions in the production of the first melt-blown nonwoven fabric B, will not be excessively fused to the first melt-blown nonwoven fabric B, and allows the first melt-blown nonwoven fabric B to be detached from the material.

The gas C is, for example, air or inert gas (e.g., nitrogen gas).

Examples of a method of applying the high-temperature gas C include a method in which the gas C that has been pressurized by a compressor (not shown) is heated by a heater (not shown).

The flow rate of the high-temperature gas C applied to the fibrous molten kneaded products A is preferably greater than or equal to 500 NL/min, more preferably greater than or equal to 1000 NL/min, and even more preferably greater than or equal to 2000 NL/min.

Also, the flow rate of the high-temperature gas C applied to the fibrous molten kneaded products A is preferably less than or equal to 12000 NL/min, and more preferably less than or equal to 10000 NL/min.

In the step (B), the temperature and flow rate of the high-temperature gas C are suitably controlled to obtain the melt-blown nonwoven fabric with high crystallization.

A moving speed at which the first melt-blown nonwoven fabric B is moved on the conveyor belt 8a (i.e., the moving speed of the conveyor belt 8a) is suitably set in consideration of the apparent density of the obtained melt-blown nonwoven fabric B while taking into account the discharge amount of the raw material composition.

The moving speed is preferably within the range of greater than or equal to 1.0 m/min and less than or equal to 6.0 m/min.

In the step (B), the first melt-blown nonwoven fabric B is transported to the winder 9 by the conveyor belt 8a, and the first melt-blown nonwoven fabric B is wound into a roll by the winder 9.

The method of producing a melt-blown nonwoven fabric according to the present embodiment may include a step (C) of obtaining a second melt-blown nonwoven fabric by heating the first melt-blown nonwoven fabric B obtained in the step (B).

It should be noted that in a case where the method of producing a melt-blown nonwoven fabric according to the present embodiment includes the step (C), the second melt-blown nonwoven fabric is the above-described melt-blown nonwoven fabric. On the other hand, in a case where the method of producing a melt-blown nonwoven fabric according to the present embodiment does not include the step (C), the first melt-blown nonwoven fabric is the above-described melt-blown nonwoven fabric.

By including the step (C) in the method of producing a melt-blown nonwoven fabric according to the present embodiment, the nonwoven fabric is made tear-resistant.

Further, by including the step (C) in the method of producing a melt-blown nonwoven fabric according to the present embodiment, the tensile elongation at break in the CD direction of the melt-blown nonwoven fabric as well as the tensile elongation at break in the MD direction of the melt-blown nonwoven fabric can be increased.

Still further, by including the step (C) in the method of producing a melt-blown nonwoven fabric according to the present embodiment, the fibers in the melt-blown nonwoven fabric are partly fused to each other, and consequently, fluffing of the melt-blown nonwoven fabric can be readily suppressed.

In the step (C), the heating temperature is preferably within the range of 80°C to 135°C.

In the step (C), the heating time during which the heating is performed within the preferable heating temperature range is preferably within the range of 2 to 300 minutes, more preferably within the range of 5 to 100 minutes, and even more preferably within the range of 10 to 50 minutes.

In the step (C), by heating the first melt-blown nonwoven fabric for two minutes or more within the preferable heating temperature range, the tensile elongation at break in the CD direction of the melt-blown nonwoven fabric as well as the tensile elongation at break in the MD direction of the melt-blown nonwoven fabric can be further increased.

Further, in the step (C), by heating the first melt-blown nonwoven fabric for 300 minutes or less within the preferable heating temperature range, the productivity of the second melt-blown nonwoven fabric is increased.

In the step (C), the first melt-blown nonwoven fabric may be heated by gas having a temperature within the above preferable heating temperature range.

The gas is, for example, air or inert gas (e.g., nitrogen gas).

A method of heating the first melt-blown nonwoven fabric by the gas having a temperature within the above preferable heating temperature range is, for example, the following: heating the first melt-blown nonwoven fabric in a heating furnace by the gas having a temperature within the above preferable heating temperature range; and/or heating the first melt-blown nonwoven fabric by applying the gas having a temperature within the above preferable heating temperature range to the first melt-blown nonwoven fabric.

Alternatively, in the step (C), the first melt-blown nonwoven fabric may be heated within the above preferable heating temperature range by sandwiching the first melt-blown nonwoven fabric between a pair of heating rolls.

In the step (C), it is preferable to heat the first melt-blown nonwoven fabric within the preferable heating temperature range in a non-contact manner.

In the step (C), in the case of heating the first melt-blown nonwoven fabric by sandwiching the first melt-blown nonwoven fabric between a pair of heating rolls, there is a concern that the first melt-blown nonwoven fabric may melt and adhere to the heating rolls.

In the step (C), by heating the first melt-blown nonwoven fabric within the above preferable heating temperature range in a manner not contacting the heating rolls or the like, the first melt-blown nonwoven fabric can be suppressed from melting and adhering to the heating rolls or the like, which is advantageous.

A method of heating the first melt-blown nonwoven fabric within the above preferable heating temperature range in a non-contact manner is, for example, a method in which the first melt-blown nonwoven fabric is heated by gas having a temperature within the above preferable heating temperature range.

In the step (C), the first melt-blown nonwoven fabric may be heated in a state where the first melt-blown nonwoven fabric is wound into a roll.

In the step (C), instead of winding the first melt-blown nonwoven fabric into a roll, the first melt-blown nonwoven fabric may be made sheet-shaped, and the sheet-shaped first melt-blown nonwoven fabric may be heated. For example, the first melt-blown nonwoven fabric in an elongated shape may be heated continuously while being transported.

In the step (C), by cooling the heated first melt-blown nonwoven fabric, the second melt-blown nonwoven fabric is obtained.

A method of cooling the heated first melt-blown nonwoven fabric may be a method in which the heated first melt-blown nonwoven fabric is naturally cooled at normal temperature and normal pressure, or may be a method in which the heated first melt-blown nonwoven fabric is forcedly cooled by applying gas (e.g., normal-temperature gas) to the heated first melt-blown nonwoven fabric.

### [Disclosure Items]

The following items each disclose a preferred embodiment.

### [Item 1]

A melt-blown nonwoven fabric including fibers, wherein: the fibers are formed from a resin composition that contains a poly(3-hydroxyalkanoate)-based resin; the poly(3-hydroxyalkanoate)-based resin includes a copolymer including a 3-hydroxybutyrate unit; a content ratio of the 3-hydroxybutyrate unit in the poly(3-hydroxyalkanoate)-based resin is greater than or equal to 80.0% by mole and less than or equal to 93.5% by mole; and an average value of fiber diameters of the fibers is less than or equal to 8.0 µm.

### [Item 2]

The melt-blown nonwoven fabric according to item 1, wherein the average value of the fiber diameters is less than or equal to 5.0 µm.

### [Item 3]

The melt-blown nonwoven fabric according to item 2, wherein the average value of the fiber diameters is less than or equal to 3.0 µm.

### [Item 4]

The melt-blown nonwoven fabric according to any one of items 1 to 3, wherein an areal weight of the melt-blown nonwoven fabric is 20 to 80 g/m².

### [Item 5]

The melt-blown nonwoven fabric according to any one of items 1 to 4, wherein a weight-average molecular weight of the resin composition is 100,000 to 250,000.

### [Item 6]

The melt-blown nonwoven fabric according to any one of items 1 to 5, wherein: a tensile elongation at break in a MD direction of the melt-blown nonwoven fabric is greater than or equal to 50%; and a tensile elongation at break in a CD direction of the melt-blown nonwoven fabric is greater than or equal to 50%.

### [Item 7]

The melt-blown nonwoven fabric according to any one of items 1 to 6, wherein a ratio of a tensile elongation at break in a CD direction of the melt-blown nonwoven fabric to a tensile elongation at break in a MD direction of the melt-blown nonwoven fabric is 0.50 to 2.00.

### [Item 8]

The melt-blown nonwoven fabric according to any one of items 1 to 7, wherein the poly(3-hydroxyalkanoate)-based resin includes a poly(3-hydroxyalkanoate)-based resin component in which the content ratio of the 3-hydroxybutyrate unit is less than or equal to 76% by mole.

### [Item 9]

A layered body including: a first nonwoven fabric; and a second nonwoven fabric layered over at least one surface of the first nonwoven fabric, wherein: the first nonwoven fabric is the melt-blown nonwoven fabric according to any one of items 1 to 8; and the second nonwoven fabric is a nonwoven fabric including cellulosic fibers.

### [Item 10]

A filter for a face mask, the filter being formed from the melt-blown nonwoven fabric according to any one of items 1 to 8 or from the layered body according to item 9.

### [Item 11]

A face mask including: a mask body; and the filter for a face mask according to item 10.

It should be noted that the present invention is not limited to the above-described embodiments. Also, the present invention is not limited by the above-described functional advantages. Further, various modifications can be made to the present invention without departing from the scope of the present invention.

### Examples

Next, the present invention is described more specifically with Examples and Comparative Examples. It should be noted that the present invention is not limited by these Examples in any way.

Materials listed below were prepared.

(Poly(3-hydroxyalkanoate)-based resin (P3HA))

P3HA-1 indicated below was prepared in accordance with a method described in Example 1 of WO 2019/142845.

P3HA-1: P3HB3HH (the content ratio of a 3-hydroxybutyrate unit: 94.5% by mole, the content ratio of a 3-hydroxyhexanoate (3HH) unit: 5.5% by mole, the weight-average molecular weight: 390000).

P3HA-2 indicated below was prepared in accordance with a method described in Example 6 of WO 2021/206155.

P3HA-2: P3HB3HH (the content ratio of a 3-hydroxybutyrate unit: 85.0% by mole, the content ratio of a 3-hydroxyhexanoate (3HH) unit: 15.0% by mole, the weight-average molecular weight: 530000) (the weight ratio of a MIBK-soluble fraction: 54% by weight, the content ratio of the 3-hydroxybutyrate unit in the MIBK-soluble fraction: 74.0% by mole, the content ratio of the 3-hydroxyhexanoate (3HH) unit in the MIBK-soluble fraction: 26.0% by mole) (the weight ratio of a MIBK-insoluble fraction: 46% by weight, the content ratio of the 3-hydroxybutyrate unit in the MIBK-insoluble fraction: 98.0% by mole, the content ratio of the 3-hydroxyhexanoate (3HH) unit in the MIBK-insoluble fraction: 2.0% by mole).

A highly accelerated stress test chamber (EHS-222MD available from ESPEC CORP.) was used to subject the above P3HA-1 to treatment under the condition of high temperature and high humidity (temperature: 120°C, humidity: 100%) for 5.9 hours, and thereby P3HA-3 indicated below was obtained.

P3HA-3: P3HB3HH (the content ratio of a 3-hydroxybutyrate unit: 94.5% by mole, the content ratio of a 3-hydroxyhexanoate (3HH) unit: 5.5% by mole, the weight-average molecular weight: 200000).

A highly accelerated stress test chamber (EHS-222MD available from ESPEC CORP.) was used to subject the above P3HA-2 to treatment under the condition of high temperature and high humidity (temperature: 120°C, humidity: 100%) for 5.5 hours, and thereby P3HA-4 indicated below was obtained.

P3HA-4: P3HB3HH (the content ratio of a 3-hydroxybutyrate unit: 85.0% by mole, the content ratio of a 3-hydroxyhexanoate (3HH) unit: 15.0% by mole, the weight-average molecular weight: 220000).

It should be noted that the content ratio of the 3-hydroxybutyrate unit and the content ratio of the 3-hydroxyhexanoate (3HH) unit in the P3HA-1 were determined in a manner described below.

First, 2 mL of a mixed solution of sulfuric acid and methanol (the volume of sulfuric acid : the volume of methanol = 15 : 85) and 2 mL of chloroform were added to 20 mg of the P3HA-1. The resulting sample was placed in a container, and the container was sealed. The sample in the sealed container was heated at 100°C for 140 minutes, and thereby a first reaction solution was obtained, the first reaction solution containing a methyl ester that was a degradation product of the P3HA-1.

Then, the first reaction solution was cooled, and 1.5 g of sodium hydrogen carbonate was added to the cooled first reaction solution little by little for neutralization. The first reaction solution to which 1.5 g of sodium hydrogen carbonate had been thus added was left stand until generation of carbon dioxide stopped. In this manner, a second reaction solution was obtained.

Further, the second reaction solution and 4 mL of diisopropyl ether were mixed together well, and thereby a mixture was obtained.

Next, the mixture was subjected to centrifugal separation, and thereby a supernatant solution was obtained.

Then, the monomer unit composition of the degradation product in the supernatant solution was analyzed by capillary gas chromatography under the conditions indicated below, and thereby the content ratio of the 3-hydroxybutyrate unit and the content ratio of the 3-hydroxyhexanoate (3HH) unit in the P3HA-1 were determined.

Gas chromatograph: GC-17A available from Shimadzu Corporation

Capillary column: NEUTRA BOND-1 (column length: 25 m, column inner diameter: 0.25 mm, liquid film thickness: 0.4 µm) available from GL Sciences Inc.

Carrier gas: He

Column inlet pressure: 100kPa

Sample amount: 1 µL

As the temperature condition, the temperature was raised from 100°C to 200°C at the rate of 8 °C/min, and then raised from 200°C to 290°C at the rate of 30 °C/min.

The content ratio of the 3-hydroxybutyrate unit and the content ratio of the 3-hydroxyhexanoate (3HH) unit in each of the P3HA-2, the P3HA-3, and the P3HA-4 were determined in the same manner as the determination of the content ratio of the 3-hydroxybutyrate unit and the content ratio of the 3-hydroxyhexanoate (3HH) unit in the P3HA-1.

With the above-described MIBK fractionation technique, the P3HA-2 was fractionated into a MIBK-soluble fraction and a MIBK-insoluble fraction. Then, the content ratio of the 3-hydroxybutyrate unit and the content ratio of the 3-hydroxyhexanoate (3HH) unit in each of the MIBK-soluble fraction and the MIBK-insoluble fraction were also determined in the same manner as the determination of the content ratio of the 3-hydroxybutyrate unit and the content ratio of the 3-hydroxyhexanoate (3HH) unit in the P3HA-1.

### (Lubricant)

BA: Behenic acid amide (BNT-22H available from Nippon Fine Chemical Co., Ltd.)

EA: Erucic acid amide (NEUTRON-S available from Nippon Fine Chemical Co., Ltd.)

### (Crystal Nucleating Agent)

PETL: Pentaerythritol (Neulizer P available from Taiseikayaku Co., Ltd.)

### (Examples 1 to 16, 19, 20 and Comparative Examples 1 to 3, 5)

The above-described materials were melt-kneaded with a blending ratio shown in Table 1 below, and thereby a raw material composition was obtained.

(Content ratio of each monomer unit in the entire poly(3-hydroxyalkanoate)-based resin)

The content ratio of the 3-hydroxybutyrate unit in the entire poly(3-hydroxyalkanoate)-based resin included in the raw material composition was calculated based on the following: the content ratio of the 3-hydroxybutyrate unit in the P3HA-1; the content ratio of the 3-hydroxybutyrate unit in the P3HA-2; the content ratio of the 3-hydroxybutyrate unit in the P3HA-3; the content ratio of the 3-hydroxybutyrate unit in the P3HA-4; and the blending ratio of the P3HA-1, the P3HA-2, the P3HA-3, and the P3HA-4.

The content ratio of the 3-hydroxyhexanoate (3HH) unit in the entire poly(3-hydroxyalkanoate)-based resin included in the raw material composition was also calculated in the same manner.

It should be noted that the content ratio of the 3-hydroxybutyrate unit in the entire poly(3-hydroxyalkanoate)-based resin included in the raw material composition also means the content ratio of the 3-hydroxybutyrate unit in the entire poly(3-hydroxyalkanoate)-based resin included in the melt-blown nonwoven fabric.

Similarly, the content ratio of the 3-hydroxyhexanoate (3HH) unit in the entire poly(3-hydroxyalkanoate)-based resin included in the raw material composition also means the content ratio of the 3-hydroxyhexanoate (3HH) unit in the entire poly(3-hydroxyalkanoate)-based resin included in the melt-blown nonwoven fabric.

The calculated values are shown in Table 1 below.

### (Measurement of physical properties of the raw material composition)

The weight-average molecular weight (Mw) and the melt mass-flow rate (MFR) at 165°C of the raw material composition were measured.

The measurement values are shown in Table 1 below.

It should be noted that the weight-average molecular weight (Mw) of the raw material composition was calculated by GPC measurement. The GPC measurement was performed under the conditions indicated below.

Measurement equipment: SHIMADZU 20A available from Shimadzu Corporation
Column: ShodexK-806M available from Showa Denko K. K.
Detector: RI detector
Reference material: polystyrene
Eluent: chloroform (HPLC grade)
Flow velocity: 1 mL/min
Temperature: 40°C

**[Table 1]**

| | Composition of the raw material composition | | | | | | | Content ratio of each monomer unit in the entire P3HA | | Physical properties of the raw material composition | |
|---|---|---|---|---|---|---|---|---|---|---|---|
| | P3HA | | | | Lubricant | | Crystal nucleating agent | | | Mw (×10⁴) | MFR at 165°C |
| | P3HA-1 | P3HA-2 | P3HA-3 | P3HA-4 | BA | EA | PETL | 3HH | 3-hydroxybutyrate | | |
| | Parts by weight | Parts by weight | Parts by weight | Parts by weight | Parts by weight | Parts by weight | Parts by weight | mol% | mol% | - | g/10min |
| Ex. 1 | 0 | 0 | 70 | 30 | 0.5 | 0.5 | 1.5 | 8.4 | 91.6 | 19.5 | 140 |
| Ex. 2 | 0 | 0 | 70 | 30 | 0.5 | 0.5 | 1.5 | 8.4 | 91.6 | 19.5 | 140 |
| Ex. 3 | 0 | 0 | 50 | 50 | 0.5 | 0.5 | 1.5 | 10.3 | 89.7 | 20.0 | 143 |
| Ex. 4 | 0 | 0 | 50 | 50 | 0.5 | 0.5 | 1.5 | 10.3 | 89.7 | 20.0 | 136 |
| Ex. 5 | 0 | 0 | 50 | 50 | 0.5 | 0.5 | 1.5 | 10.3 | 89.7 | 19.9 | 135 |
| Ex. 6 | 0 | 0 | 50 | 50 | 0.5 | 0.5 | 1.5 | 10.3 | 89.7 | 19.9 | 135 |
| Ex. 7 | 0 | 0 | 50 | 50 | 0.5 | 0.5 | 1.5 | 10.3 | 89.7 | 19.9 | 135 |
| Ex. 8 | 0 | 0 | 50 | 50 | 0.5 | 0.5 | 1.5 | 10.3 | 89.7 | 19.9 | 135 |
| Ex. 9 | 0 | 0 | 50 | 50 | 0.5 | 0.5 | 1.5 | 10.3 | 89.7 | 19.9 | 135 |
| Ex. 10 | 0 | 0 | 50 | 50 | 0.5 | 0.5 | 1.5 | 10.3 | 89.7 | 19.9 | 135 |
| Ex. 11 | 0 | 0 | 50 | 50 | 0.5 | 0.5 | 1.5 | 10.3 | 89.7 | 19.9 | 135 |
| Ex. 12 | 0 | 0 | 50 | 50 | 0.5 | 0.5 | 1.5 | 10.3 | 89.7 | 19.9 | 135 |
| Ex. 13 | 0 | 0 | 30 | 70 | 0.5 | 0.5 | 1.5 | 12.2 | 87.8 | 18.6 | 137 |
| Ex. 14 | 0 | 0 | 30 | 70 | 0.5 | 0.5 | 1.5 | 12.2 | 87.8 | 18.6 | 137 |
| Ex. 15 | 0 | 0 | 30 | 70 | 0.5 | 0.5 | 1.5 | 12.2 | 87.8 | 18.6 | 137 |
| Ex. 16 | 0 | 0 | 0 | 100 | 0.5 | 0.5 | 1.5 | 15.0 | 85.0 | 21.5 | 114 |
| Ex. 17 | 0 | 0 | 70 | 30 | 0.5 | 0.5 | 1.5 | 8.4 | 91.6 | 19.5 | 140 |
| Ex. 18 | 0 | 0 | 50 | 50 | 0.5 | 0.5 | 1.5 | 10.3 | 89.7 | 20.0 | 136 |
| Ex. 19 | 50 | 50 | 0 | 0 | 0.5 | 0.5 | 1.5 | 10.3 | 89.7 | 39.1 | 20 |
| Comp. Ex. 1 | 0 | 0 | 100 | 0 | 0.5 | 0.5 | 1.5 | 5.5 | 94.5 | 19.5 | 147 |
| Comp. Ex. 2 | 0 | 0 | 100 | 0 | 0.5 | 0.5 | 1.5 | 5.5 | 94.5 | 19.5 | 147 |
| Comp. Ex. 3 | 0 | 0 | 100 | 0 | 0.5 | 0.5 | 1.5 | 5.5 | 94.5 | 19.5 | 147 |
| Comp. Ex. 4 | 0 | 0 | 100 | 0 | 0.5 | 0.5 | 1.5 | 5.5 | 94.5 | 19.5 | 147 |
| Ex. 20 | 0 | 0 | 0 | 100 | 0.5 | 0.5 | 1.5 | 15.0 | 85.0 | 19.8 | 112 |
| Comp. Ex. 5 | 0 | 0 | 0 | 100 | 0.5 | 0.5 | 1.5 | 15.0 | 85.0 | 19.8 | 112 |

With use of the melt-blown nonwoven fabric producing apparatus shown in FIGS. 1 to 3, the first melt-blown nonwoven fabric was produced from the raw material composition under the conditions shown in Table 2 below. It should be noted that a nozzle having a width of 600 mm was used in the production of the first melt-blown nonwoven fabric.

Next, with use of a hot-blast dryer of a compartment type (PH-202 available from ESPEC CORP.), the first melt-blown nonwoven fabric was heated under the heating condition indicated in Table 2 below, which was then naturally cooled at normal temperature and normal pressure (20°C, 1 atm). In this manner, the melt-blown nonwoven fabric of each of Examples 1 to 16, 19, 20 and that of each of Comparative Examples 1 to 3, 5 were each obtained as the second melt-blown nonwoven fabric.

### (Examples 17, 18 and Comparative Example 4)

The first melt-blown nonwoven fabrics of Examples 1, 4 and Comparative Example 1 were used as the melt-blown nonwoven fabrics of Examples 17, 18 and Comparative Example 4, respectively.

**[Table 2]**

| | Extruder temperature | Gear pump | Nozzle | | | | Gas (air) applied to fibrous molten kneaded product | | DCD | Conveyor belt | Heating of first melt-blown nonwoven fabric | |
|---|---|---|---|---|---|---|---|---|---|---|---|---|
| | Temperature | Rotation speed | Nozzle hole opening diameter | Number of nozzle holes | Space between nozzle holes | Temperature | Temperature | Flow rate | | Moving speed | Temperature | Time |
| | °C | rpm | mm | Number of holes | mm | °C | °C | NL/min | mm | m/min | °C | Minutes |
| Ex. 1 | 172 | 15 | 0.15 | 1207 | 0.35 | 182 | 165 | 6140 | 140 | 1.4 | 120 | 20 |
| Ex. 2 | 172 | 15 | 0.15 | 1207 | 0.35 | 182 | 165 | 6140 | 140 | 2.3 | 120 | 20 |
| Ex. 3 | 172 | 15 | 0.15 | 1207 | 0.35 | 182 | 187 | 6140 | 125 | 1.4 | 120 | 20 |
| Ex. 4 | 172 | 15 | 0.15 | 1207 | 0.35 | 182 | 165 | 6140 | 125 | 1.5 | 120 | 20 |
| Ex. 5 | 172 | 15 | 0.15 | 1207 | 0.35 | 182 | 165 | 6140 | 120 | 2.0 | 120 | 20 |
| Ex. 6 | 172 | 10 | 0.15 | 1207 | 0.35 | 182 | 165 | 5530 | 140 | 1.3 | 120 | 20 |
| Ex. 7 | 172 | 10 | 0.15 | 1207 | 0.35 | 182 | 165 | 5530 | 140 | 1.5 | 120 | 20 |
| Ex. 8 | 172 | 10 | 0.15 | 1207 | 0.35 | 182 | 165 | 5530 | 140 | 1.7 | 120 | 20 |
| Ex. 9 | 172 | 7 | 0.15 | 1207 | 0.35 | 182 | 165 | 3100 | 140 | 0.9 | 120 | 20 |
| Ex. 10 | 172 | 7 | 0.15 | 1207 | 0.35 | 182 | 165 | 3100 | 140 | 1.0 | 120 | 20 |
| Ex. 11 | 172 | 7 | 0.15 | 1207 | 0.35 | 182 | 165 | 3100 | 140 | 1.2 | 120 | 20 |
| Ex. 12 | 172 | 7 | 0.15 | 1207 | 0.35 | 182 | 165 | 3100 | 140 | 1.4 | 120 | 20 |
| Ex. 13 | 172 | 15 | 0.15 | 1207 | 0.35 | 182 | 165 | 6140 | 140 | 1.4 | 120 | 20 |
| Ex. 14 | 172 | 15 | 0.15 | 1207 | 0.35 | 182 | 165 | 6140 | 140 | 2.3 | 120 | 20 |
| Ex. 15 | 172 | 7 | 0.15 | 1207 | 0.35 | 182 | 165 | 3080 | 140 | 1.1 | 120 | 20 |
| Ex. 16 | 172 | 15 | 0.15 | 1207 | 0.35 | 182 | 165 | 6140 | 120 | 2.0 | 120 | 20 |
| Ex. 17 | 172 | 15 | 0.15 | 1207 | 0.35 | 182 | 165 | 6140 | 140 | 1.4 | No heating | |
| Ex. 18 | 172 | 15 | 0.15 | 1207 | 0.35 | 182 | 165 | 6140 | 125 | 1.5 | No heating | |
| Ex. 19 | 177 | 15 | 0.30 | 1092 | 0.20 | 190 | 175 | 6140 | 125 | 2.0 | 120 | 20 |
| Comp. Ex. 1 | 172 | 15 | 0.15 | 1207 | 0.35 | 182 | 165 | 6140 | 120 | 1.4 | 120 | 20 |
| Comp. Ex. 2 | 172 | 15 | 0.15 | 1207 | 0.35 | 182 | 165 | 6140 | 120 | 2.3 | 120 | 20 |
| Comp. Ex. 3 | 172 | 7 | 0.15 | 1207 | 0.35 | 182 | 165 | 3050 | 140 | 1.1 | 120 | 20 |
| Comp. Ex. 4 | 172 | 15 | 0.15 | 1207 | 0.35 | 182 | 165 | 6140 | 120 | 1.4 | No heating | |
| Ex. 20 | 172 | 15 | 0.15 | 1207 | 0.35 | 182 | 175 | 2070 | 150 | 1.3 | 120 | 20 |
| Comp. Ex. 5 | 172 | 15 | 0.15 | 1207 | 0.35 | 182 | 175 | 900 | 150 | 1.3 | 120 | 20 |

(Measurement of physical properties of the melt-blown nonwoven fabric)

For each melt-blown nonwoven fabric, the areal weight, the thickness, the average value of the fiber diameters of the fibers, the coefficient of variation of the fiber diameters of the fibers, and the weight-average molecular weight (Mw) of the resin composition were measured.

The measurement values are shown in Table 3 below.

It should be noted that the average value of the fiber diameters of the fibers and the coefficient of variation of the fiber diameters of the fibers were determined by using a benchtop scanning electron microscope JCM-6000 available from JEOL Ltd.

The weight-average molecular weight (Mw) of the resin composition was measured in the same manner as the measurement of the weight-average molecular weight (Mw) of the raw material composition.

### (Maximum load, tensile elongation at maximum load, and tensile elongation at break in each of CD direction and MD direction of the melt-blown nonwoven fabric)

For each melt-blown nonwoven fabric, the maximum load, the tensile elongation at maximum load, and the tensile elongation at break in each of the CD direction and the MD direction were measured.

It should be noted that the maximum load, the tensile elongation at maximum load, and the tensile elongation at break in each of the CD direction and the MD direction were measured by using a constant rate extension type tension testing machine that accords with JIS B7721:2018 "Tension/compression testing machines-Calibration and verification of the force-measuring system".

As the constant rate extension type tension testing machine, a universal tester (RTG-1210 available from A&D Company, Limited) or the like was used.

First, a test piece (width: 8 mm, length: 40 mm) was cut out from the melt-blown nonwoven fabric.

Next, the test piece with an initial load applied thereto was attached to the tension testing machine, i.e., gripped by grips of the tension testing machine, with the length of the test piece between the grips being 20 mm. In other words, at a time when the initial load was applied to the test piece, the length of the test piece between the grips was 20 mm. Here, the initial load was applied to the test piece by pulling the test piece by hand to such an extent that sagging did not occur.

Then, a load was applied to the test piece at a tensile speed of 20 mm/min until the test piece broke, and the maximum load on the test piece in each the CD direction and the MD direction was measured.

Also, with an equation shown below, the tensile elongation at maximum load and the tensile elongation at break in each of the CD direction and the MD direction were determined. Tensile elongation at maximum load (%) = [(the length of the test piece between the grips at maximum load - the length of the test piece between the grips at initial load)/the length of the test piece between the grips at initial load] × 100 (%) Tensile elongation at break (%) = [(the length of the test piece between the grips at break - the length of the test piece between the grips at initial load)/the length of the test piece between the grips at initial load] × 100 (%)

The measurement values are shown in Table 3 below.

(Tensile elongation at break in CD direction / tensile elongation at break in MD direction)

The tensile elongation at break in the CD direction / the tensile elongation at break in the MD direction (CD elongation / MD elongation) was calculated.

Table 3 below shows the calculated CD elongation / MD elongation.

### (Viral filtration efficiency, particle filtration efficiency, and pollen filtration efficiency of the melt-blown nonwoven fabric)

For each melt-blown nonwoven fabric, viral filtration efficiency (VFE), particle filtration efficiency (PFE), and pollen filtration efficiency were measured. The viral filtration efficiency (VFE), the particle filtration efficiency (PFE), and the pollen filtration efficiency were measured in accordance with JIS T9001:2021 "Performance requirements and test methods of medical face masks and non-medical face masks".

It should be noted that the viral filtration efficiency means efficiency in filtering out viruses attached to particles.

The measurement values are shown in Table 3 below.

### (Pressure drop caused by the melt-blown nonwoven fabric)

A pressure drop caused by each melt-blown nonwoven fabric was measured.

The pressure drop was measured in accordance with JIS T9001:2021 "Performance requirements and test methods of medical face masks and non-medical face masks".

The measurement values are shown in Table 3 below.

**[Table 3]**

| | Melt-blown nonwoven fabric | | | | | | | | | | | | | | | |
|---|---|---|---|---|---|---|---|---|---|---|---|---|---|---|---|---|
| | Areal weight | Thickness | Fiber diameter | | Mw (×10⁴) | Maximum load | | Tensile elongation at maximum load | | Tensile elongation at break | | | VFE | PFE | Pollen filtration efficiency | Pressure drop |
| | | | Average value | Coefficient of variation | | CD | MD | CD | MD | CD | MD | CD elongation / MD elongation | | | | |
| | g/m² | mm | µm | - | - | N | N | % | % | % | % | - | % | % | % | Pa/cm² |
| Ex. 1 | 62 | 0.31 | 2.3 | 0.15 | 14.7 | 3.6 | 6.9 | 271 | 67 | 285 | 184 | 1.55 | 96 | 96 | Unmeasured | 82 |
| Ex. 2 | 37 | 0.24 | 2.4 | 0.18 | 14.7 | 2.3 | 4.1 | 180 | 148 | 198 | 190 | 1.04 | 87 | 94 | Unmeasured | 40 |
| Ex. 3 | 63 | 0.31 | 2.1 | 0.18 | 14.1 | 3.2 | 5.8 | 259 | 272 | 274 | 303 | 0.90 | 99 | Unmeasured | Unmeasured | 125 |
| Ex. 4 | 60 | 0.27 | 2.4 | 0.19 | 14.4 | 2.4 | 4.7 | 173 | 175 | 184 | 209 | 0.88 | 95 | Unmeasured | Unmeasured | 84 |
| Ex. 5 | 41 | 0.24 | 2.3 | 0.17 | 15.3 | 2.3 | 4.3 | 287 | 206 | 312 | 243 | 1.28 | 88 | 90 | Unmeasured | 46 |
| Ex. 6 | 41 | 0.25 | 1.9 | 0.12 | 13.8 | 2.2 | 4.5 | 307 | 198 | 333 | 242 | 1.38 | 97 | 96 | Unmeasured | 72 |
| Ex. 7 | 36 | 0.23 | 1.7 | 0.22 | 13.7 | 1.9 | 3.9 | 318 | 197 | 335 | 240 | 1.39 | 94 | 95 | Unmeasured | 67 |
| Ex. 8 | 32 | 0.20 | 1.7 | 0.21 | 13.6 | 1.6 | 3.2 | 305 | 194 | 325 | 190 | 1.71 | 96 | 95 | Unmeasured | 61 |
| Ex. 9 | 42 | 0.22 | 1.3 | 0.27 | 11.9 | 1.7 | 3.8 | 273 | 60 | 299 | 209 | 1.43 | 96 | 96 | Unmeasured | 67 |
| Ex. 10 | 38 | 0.21 | 1.4 | 0.24 | 11.8 | 1.6 | 3.6 | 167 | 10 | 184 | 136 | 1.35 | 95 | 94 | Unmeasured | 56 |
| Ex. 11 | 32 | 0.18 | 1.3 | 0.30 | 11.7 | 1.2 | 2.7 | 202 | 109 | 226 | 162 | 1.39 | 90 | 95 | Unmeasured | 53 |
| Ex. 12 | 27 | 0.16 | 1.1 | 0.23 | 11.9 | 1.1 | 2.3 | 197 | 129 | 212 | 177 | 1.20 | 87 | 95 | Unmeasured | 39 |
| Ex. 13 | 62 | 0.30 | 2.1 | 0.20 | 15.1 | 2.5 | 4.9 | 276 | 326 | 286 | 349 | 0.82 | 95 | 96 | Unmeasured | 91 |
| Ex. 14 | 37 | 0.23 | 2.5 | 0.23 | 15.1 | 1.4 | 2.6 | 273 | 279 | 286 | 323 | 0.89 | 86 | 93 | Unmeasured | 45 |
| Ex. 15 | 36 | 0.21 | 1.4 | 0.24 | 11.5 | 1.1 | 2.4 | 212 | 59 | 223 | 207 | 1.08 | 94 | 96 | Unmeasured | 62 |
| Ex. 16 | 41 | 0.24 | 2.2 | 0.17 | 15.8 | 1.4 | 2.6 | 312 | 290 | 335 | 336 | 1.00 | 85 | 90 | >99 | 45 |
| Ex. 17 | 62 | 0.31 | 2.3 | 0.15 | 14.7 | 2.3 | 6.3 | 112 | 8 | 141 | 108 | 1.31 | 95 | 99 | Unmeasured | 77 |
| Ex. 18 | 60 | 0.27 | 2.4 | 0.19 | 14.4 | 2.5 | 5.0 | 124 | 70 | 136 | 115 | 1.18 | 94 | 99 | Unmeasured | 73 |
| Ex. 19 | 40 | 0.22 | 3.3 | 0.26 | 19.5 | 2.0 | 3.6 | 279 | 287 | 292 | 324 | 0.90 | 57 | 90 | >99 | 16 |
| Comp. Ex. 1 | 61 | 0.25 | 2.3 | 0.15 | 14.6 | 4.0 | 9.2 | 86 | 35 | 112 | 49 | 2.31 | 96 | 97 | Unmeasured | 73 |
| **Comp.** Ex. 2 | 36 | 0.21 | 2.5 | 0.13 | 14.8 | 2.4 | 5.3 | 72 | 31 | 97 | 48 | 2.03 | 88 | 95 | Unmeasured | 40 |
| Comp. Ex. 3 | 35 | 0.18 | 1.5 | 0.27 | 11.5 | 1.6 | 4.5 | 8 | 8 | 27 | 11 | 2.46 | 97 | 97 | Unmeasured | 56 |
| Comp. Ex. 4 | 61 | 0.25 | 2.3 | 0.15 | 14.6 | 2.4 | 7.5 | 10 | 7 | 67 | 22 | 3.05 | 95 | 98 | Unmeasured | 74 |
| Ex. 20 | 58 | 0.26 | 6.1 | 0.23 | 14.7 | 1.3 | 2.2 | 208 | 191 | 229 | 219 | 1.05 | 49 | 66 | >99 | 11 |
| Comp. Ex. 5 | 57 | 0.32 | 9.6 | 0.16 | 15.3 | 1.1 | 1.8 | 105 | 60 | 126 | 84 | 1.50 | 17 | 49 | 91 | <5 |

(Tear resistance of the melt-blown nonwoven fabric and reduction in fluffing of the melt-blown nonwoven fabric)

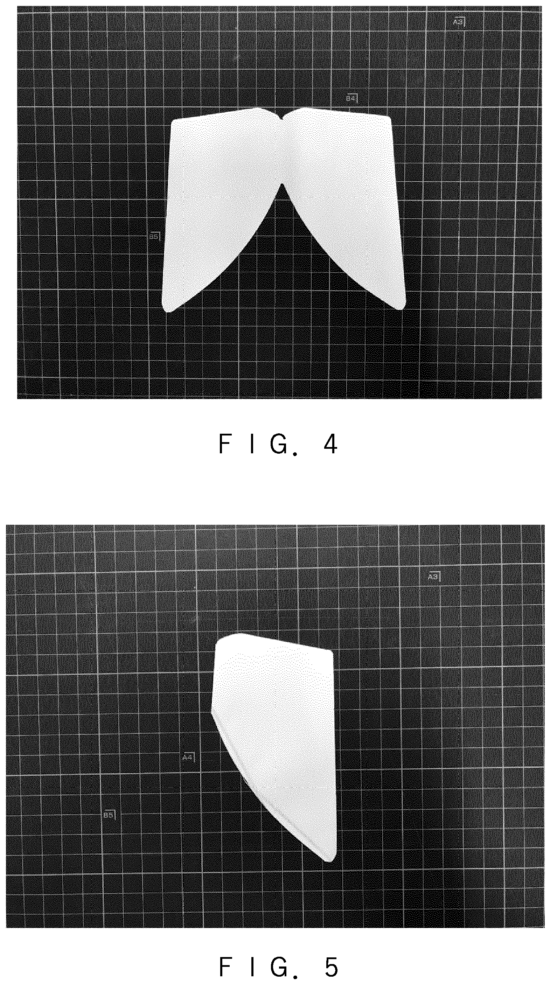

Each melt-blown nonwoven fabric was cut, and thereby a first test piece having a shape shown in FIG. 4 was obtained.

Next, the first test piece was folded in half, and overlapping portions thereof were fused to each other. In this manner, a second test piece having a shape shown in FIG. 5 was obtained.

A mask body was prepared, the mask body including: a pair of ear loops; and a holder to hold a filter for a face mask.

Then, the second test piece serving as a filter for a face mask was put in the holder of the mask body, and thereby a face mask was fabricated.

Next, a professional engineer wore the face mask for three hours, and evaluated the face mask based on the criteria indicated below.

The results are shown in Table 4 below.

### <Tear Resistance>

3: No crack occurred in the second test piece, and no tear occurred in the fused portion of the second test piece.
2: A crack of less than 1 cm occurred in the second test piece, or a tear of less than 1 cm occurred in the fused portion of the second test piece (i.e., no crack of 1 cm or greater occurred in the second test piece, and no tear of 1 cm or greater occurred in the fused portion of the second test piece).
1: A crack of 1 cm or greater occurred in the second test piece, or a tear of 1 cm or greater occurred in the fused portion of the second test piece.

### <Reduction in fluffing>

3: No fluffing on the second test piece was visually observed.
2: A little fluffing occurred on the second test piece, but no adhesion of fluff to the mask body was visually observed.
1. Significant fluffing occurred on the second test piece, and adhesion of fluff to the mask body was visually observed.

**[Table 4]**

| | Tear resistance | Reduction in fluffing |
|---|---|---|
| Example 1 | 3 | 2 |
| Example 4 | 3 | 2 |
| Example 10 | 3 | 2 |
| Example 13 | 3 | 3 |
| Example 17 | 2 | 2 |
| Example 18 | 2 | 2 |
| Comparative Example 1 | 1 | 1 |

As shown in Table 3, in Examples 16, 19, and 20, which fall within the scope of the present invention, the viral filtration efficiency (VFE), the particle filtration efficiency (PFE), and the pollen filtration efficiency were higher than those in Comparative Example 5, in which the average value of the fiber diameters of the fibers was 9.6 µm.

Further, as shown in Table 3, in Examples 1, 2, 5 to 15, 17, and 18, which fall within the scope of the present invention, the viral filtration efficiency (VFE) and the particle filtration efficiency (PFE) were higher than those in Comparative Example 5, in which the average value of the fiber diameters of the fibers was 9.6 µm. It should be noted that the pollen filtration efficiency was not measured in Examples 1, 2, 5 to 15, 17, and 18.

Further, as shown in Table 3, in Examples 3 and 4, which fall within the scope of the present invention, the viral filtration efficiency (VFE) was higher than that in Comparative Example 5, in which the average value of the fiber diameters of the fibers was 9.6 µm. It should be noted that the particle filtration efficiency (PFE) and the pollen filtration efficiency were not measured in Examples 3 and 4.

As shown in Tables 1 and 4, in Examples 1, 4, 10, and 13, which fall within the scope of the present invention, the melt-blown nonwoven fabric was more tear-resistant than in Comparative Example 1, in which the content ratio of the 3-hydroxybutyrate unit in the poly(3-hydroxyalkanoate)-based resin was 94.5% by mole.

As shown in Table 3, in Examples 1 to 18, which fall within the scope of the present invention, the tensile elongation at break in the CD direction and the tensile elongation at break in the MD direction were higher than those in Comparative Example 1, and the CD elongation / MD elongation was close to 1.00.

Accordingly, also in Examples 2, 3, 5 to 9, 11, 12, and 14 to 18, similar to Examples 1, 4, 10, and 13, it is presumed that the melt-blown nonwoven fabric is more tear-resistant than in Comparative Example 1.

Thus, it is understood that the present invention makes it possible to provide a melt-blown nonwoven fabric that is tear-resistant and that has high particle filtration efficiency.

Further, as shown in Table 3, in Examples 1, 2, 5 to 15, 17, and 18, in which the average value of the fiber diameters of the fibers was less than or equal to 5.0 µm, the viral filtration efficiency (VFE) and the particle filtration efficiency (PFE) were higher than those in Example 20, in which the average value of the fiber diameters of the fibers was 6.1 µm. It should be noted that the pollen filtration efficiency was not measured in Examples 1, 2, 5 to 15, 17, and 18.

Still further, as shown in Table 3, in Examples 3 and 4, in which the average value of the fiber diameters of the fibers was less than or equal to 5.0 µm, the viral filtration efficiency (VFE) was higher than that in Example 20, in which the average value of the fiber diameters of the fibers was 6.1 µm. It should be noted that the particle filtration efficiency (PFE) and the pollen filtration efficiency were not measured in Examples 3 and 4.

Still further, as shown in Table 3, in Examples 16 and 19, in which the average value of the fiber diameters of the fibers was less than or equal to 5.0 µm, the pollen filtration efficiency was about the same as that in Example 20, in which the average value of the fiber diameters of the fibers was 6.1 µm, but the viral filtration efficiency (VFE) and the particle filtration efficiency (PFE) in Examples 16 and 19 were higher than those in Example 20.

Thus, it is understood that by setting the average value of the fiber diameters of the fibers in the melt-blown nonwoven fabric to less than or equal to 5.0 µm, it becomes possible to provide a melt-blown nonwoven fabric having even higher particle filtration efficiency.

Still further, as shown in Table 3, in Examples 1, 2, 6 to 15, 17, and 18, in which the average value of the fiber diameters of the fibers was less than or equal to 3.0 µm, the viral filtration efficiency (VFE) and the particle filtration efficiency (PFE) were higher than those in Example 19, in which the average value of the fiber diameters of the fibers was 3.3 µm. It should be noted that the pollen filtration efficiency was not measured in Examples 1, 2, 6 to 15, 17, and 18.

Still further, as shown in Table 3, in Examples 3 and 4, in which the average value of the fiber diameters of the fibers was less than or equal to 3.0 µm, the viral filtration efficiency (VFE) was higher than that in Example 19, in which the average value of the fiber diameters of the fibers was 3.3 µm. It should be noted that the particle filtration efficiency (PFE) and the pollen filtration efficiency were not measured in Examples 3 and 4.

Still further, as shown in Table 3, in Example 5, in which the average value of the fiber diameters of the fibers was less than or equal to 3.0 µm, the particle filtration efficiency (PFE) was about the same as that in Example 19, in which the average value of the fiber diameters of the fibers was 3.3 µm, but the viral filtration efficiency (VFE) in Example 5 was higher than that in Example 19. It should be noted that the pollen filtration efficiency was not measured in Example 5.

Still further, as shown in Table 3, in Example 16, in which the average value of the fiber diameters of the fibers was less than or equal to 3.0 µm, the particle filtration efficiency (PFE) and the pollen filtration efficiency were about the same as those in Example 19, in which the average value of the fiber diameters of the fibers was 3.3 µm, but the viral filtration efficiency (VFE) in Example 16 was higher than that in Example 19.

Thus, it is understood that by setting the average value of the fiber diameters of the fibers in the melt-blown nonwoven fabric to less than or equal to 3.0 µm, it becomes possible to provide a melt-blown nonwoven fabric having even higher particle filtration efficiency.

As shown in Tables 3 and 4, in Examples 1, 2, and 6 to 15, in which the tensile elongation at break in the MD direction of the melt-blown nonwoven fabric was greater than or equal to 120% and the tensile elongation at break in the CD direction of the melt-blown nonwoven fabric was greater than or equal to 120%, the melt-blown nonwoven fabric was more tear-resistant than in Examples 17, 18, in which the tensile elongation at break in the MD direction of the melt-blown nonwoven fabric was less than or equal to 115%.

Thus, it is understood that as a result of the tensile elongation at break in the MD direction of the melt-blown nonwoven fabric being greater than or equal to 120% and the tensile elongation at break in the CD direction of the melt-blown nonwoven fabric being greater than or equal to 120%, the melt-blown nonwoven fabric is made even more tear-resistant.

Further, as shown in Table 4, in Example 1, in which the first melt-blown nonwoven fabric as the nonwoven fabric of Example 17 was heated and thereby the second melt-blown nonwoven fabric was obtained, the melt-blown nonwoven fabric was more tear-resistant than in Example 17.

Further as shown in Table 4, in Example 4, in which the first melt-blown nonwoven fabric as the nonwoven fabric of Example 18 was heated and thereby the second melt-blown nonwoven fabric was obtained, the melt-blown nonwoven fabric was more tear-resistant than in Example 18.

Thus, it is understood that as a result of heating the melt-blown nonwoven fabric, the melt-blown nonwoven fabric is made even more tear-resistant.

Further, as shown in Table 3, in Example 1, in which the first melt-blown nonwoven fabric as the nonwoven fabric of Example 17 was heated and thereby the second melt-blown nonwoven fabric was obtained, the tensile elongation at break in the MD direction of the melt-blown nonwoven fabric and the tensile elongation at break in the CD direction of the melt-blown nonwoven fabric were higher than those in Example 17.

Still further, as shown in Table 3, in Example 4, in which the first melt-blown nonwoven fabric as the nonwoven fabric of Example 18 was heated and thereby the second melt-blown nonwoven fabric was obtained, the tensile elongation at break in the MD direction of the melt-blown nonwoven fabric and the tensile elongation at break in the CD direction of the melt-blown nonwoven fabric were higher than those in Example 18.

Thus, it is understood that as a result of heating the melt-blown nonwoven fabric, the tensile elongation at break in the MD direction of the melt-blown nonwoven fabric and the tensile elongation at break in the CD direction of the melt-blown nonwoven fabric increase.

Further, as shown in Table 3, in Example 1, in which the first melt-blown nonwoven fabric as the nonwoven fabric of Example 17 was heated and thereby the second melt-blown nonwoven fabric was obtained, the tensile elongation at break in the CD direction and the tensile elongation at break in the MD direction were higher than those in Example 17.

Still further, as shown in Table 3, in Example 4, in which the first melt-blown nonwoven fabric as the nonwoven fabric of Example 18 was heated and thereby the second melt-blown nonwoven fabric was obtained, the tensile elongation at break in the CD direction and the tensile elongation at break in the MD direction were higher than those in Example 18.

Thus, it is understood that the tensile elongation at break in the CD direction of the melt-blown nonwoven fabric and the tensile elongation at break in the MD direction of the melt-blown nonwoven fabric can be increased by heating the melt-blown nonwoven fabric.

Further, as shown in Tables 1 and 4, in Examples 1, 4, 10, 13, 17, and 18, which fall within the scope of the present invention, fluffing of the melt-blown nonwoven fabric was reduced compared to Comparative Example 1, in which the content ratio of the 3-hydroxybutyrate unit in the poly(3-hydroxyalkanoate)-based resin was 94.5% by mole.

### Reference Signs List

1: melt-blown nonwoven fabric producing apparatus, 2: hopper, 3: extruder, 4: gear pump, 5: filter, 6: kneader, 7: nozzle, 7a: nozzle hole, 8: collector, 8a: conveyor belt, 8b: roller, 9: winder, A: kneaded product, B: first melt-blown nonwoven fabric, C: gas

## Claims

1. A melt-blown nonwoven fabric comprising fibers, wherein:
the fibers are formed from a resin composition that contains a poly(3-hydroxyalkanoate)-based resin;
the poly(3-hydroxyalkanoate)-based resin includes a copolymer including a 3-hydroxybutyrate unit;
a content ratio of the 3-hydroxybutyrate unit in the poly(3-hydroxyalkanoate)-based resin is greater than or equal to 80.0% by mole and less than or equal to 93.5% by mole; and
an average value of fiber diameters of the fibers is less than or equal to 8.0 µm.

2. The melt-blown nonwoven fabric according to claim 1, wherein
the average value of the fiber diameters is less than or equal to 5.0 µm.

3. The melt-blown nonwoven fabric according to claim 2, wherein
the average value of the fiber diameters is less than or equal to 3.0 µm.

4. The melt-blown nonwoven fabric according to any one of claims 1 to 3, wherein
an areal weight of the melt-blown nonwoven fabric is 20 to 80 g/m².

5. The melt-blown nonwoven fabric according to any one of claims 1 to 3, wherein
a weight-average molecular weight of the resin composition is 100,000 to 250,000.

6. The melt-blown nonwoven fabric according to any one of claims 1 to 3, wherein:
a tensile elongation at break in a MD direction of the melt-blown nonwoven fabric is greater than or equal to 50%; and
a tensile elongation at break in a CD direction of the melt-blown nonwoven fabric is greater than or equal to 50%.

7. The melt-blown nonwoven fabric according to any one of claims 1 to 3, wherein
a ratio of a tensile elongation at break in a CD direction of the melt-blown nonwoven fabric to a tensile elongation at break in a MD direction of the melt-blown nonwoven fabric is 0.50 to 2.00.

8. The melt-blown nonwoven fabric according to any one of claims 1 to 3, wherein
the poly(3-hydroxyalkanoate)-based resin includes a poly(3-hydroxyalkanoate)-based resin component in which the content ratio of the 3-hydroxybutyrate unit is less than or equal to 76% by mole.

9. A layered body comprising:
a first nonwoven fabric; and
a second nonwoven fabric layered over at least one surface of the first nonwoven fabric, wherein:
the first nonwoven fabric is the melt-blown nonwoven fabric according to claim 1; and
the second nonwoven fabric is a nonwoven fabric including cellulosic fibers.

10. A filter for a face mask, the filter being formed from the melt-blown nonwoven fabric according to any one of claims 1 to 3 or from the layered body according to claim 9.

11. A face mask comprising:
a mask body; and
the filter for a face mask according to claim 10.
